(19) Europäisches Patentamt
European Patent Office
Office européen des brevets

(11) **EP 4 488 744 A1**

(12) **EUROPEAN PATENT APPLICATION**
published in accordance with Art. 153(4) EPC

(43) Date of publication:
**08.01.2025 Bulletin 2025/02**

(21) Application number: **22929964.9**

(22) Date of filing: **21.12.2022**

(51) International Patent Classification (IPC):
*G02C 7/06* (2006.01)

(52) Cooperative Patent Classification (CPC):
**G02C 7/06**

(86) International application number:
**PCT/JP2022/047024**

(87) International publication number:
**WO 2023/166822 (07.09.2023 Gazette 2023/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.03.2022 JP 2022032222**

(71) Applicant: **Hoya Lens Thailand Ltd.
Pathumthani 12130 (TH)**

(72) Inventors:
• **UCHIDANI Takahiro
  Tokyo 160-8347 (JP)**
• **MATSUOKA Shohei
  Tokyo 160-8347 (JP)**

(74) Representative: **Betten & Resch
Patent- und Rechtsanwälte PartGmbB
Maximiliansplatz 14
80333 München (DE)**

(54) **SPECTACLE LENS, METHOD FOR MANUFACTURING SPECTACLE LENS, METHOD FOR DESIGNING SPECTACLE LENS, SPECTACLES, AND METHOD FOR MANUFACTURING SPECTACLES**

(57)     Provided is an eyeglass lens provided with a functional region, wherein the functional region includes: a base region that causes a luminous flux that has entered an object-side face to exit from an eyeball-side face, enter a pupil of a wearer, and converge on a retina; and retinal non-convergence regions that cause a luminous flux that has entered the object-side face to exit from the eyeball-side face, and do not cause a luminous flux that has entered the pupil of the wearer to converge on the retina, at least some of the retinal non-convergence regions are buffer regions that can compensate local negative astigmatism occurring due to spherical aberration of the eye at some positions of a distribution of the astigmatism, and surfaces of the buffer regions are toric surfaces whose axial direction is a circumferential direction, and are elongated along the circumferential direction in a plan view.

**FIG. 1A**

P

## FIG. 1B

P

## FIG. 1C

## Description

Technical Field

The present invention relates to an eyeglass lens, an eyeglass lens manufacturing method, an eyeglass lens design method, eyeglasses, and an eyeglass manufacturing method.

Background Art

As eyeglass lenses that suppress the progression of a refractive error such as myopia, there are eyeglass lenses in which a plurality of island-shaped regions (otherwise known as "second refractive regions" or "micro-convex portions") whose refractive power is more positive than a prescription refractive power are provided on the lenses (see Patent Document 1, for example). In Patent Document 1, the region that provides the prescription refractive power is a first refractive region. The first refractive region is also referred to as a base region.

According to an eyeglass lens of this configuration, among luminous fluxes that enter the lens from an object-side face and exit from an eyeball-side face, a luminous flux that has passed through a region other than micro-convex portions is focused on a retina of a wearer, whereas a luminous flux that has passed through the micro-convex portions is focused at a position located forward of the retina, thus suppressing the progression of myopia.

Patent Document 2 describes in [0094] that by changing the above-described micro-convex portions to concave portions, it is possible to obtain an eyeglass lens that has the function of suppressing the progression of hyperopia. In the present specification, the effect of suppressing the progression of myopia and the effect of suppressing the progression of hyperopia (to be exact, the effect of mitigating hyperopia) are collectively referred to also as the effect of suppressing the progression of or mitigating a refractive error. The following will describe the effect of suppressing the progression of myopia as an example.

Patent Document 3 describes in pp. 20 and 21 that by increasing or decreasing the refractive degree and cylindrical degree of micro-convex portions unsymmetrically based on the asymmetry of the periphery of the retina so that the degrees are varied from the center to the periphery in the circumferential direction, it is possible to obtain an eyeglass lens that is highly effective in suppressing the progression of myopia.

Citation List

Patent Documents

Patent Document 1: U.S. Patent Application Publication No. 2017/0131567
Patent Document 2: WO 2020/067028
Patent Document 3: WO 2019/166653

Summary of Invention

Technical Problem

Human eyes have spherical aberration. Although there are a variety of factors such as the cornea and the crystal lens that cause spherical aberration, hereinafter, spherical aberration is simply referred to as "spherical aberration of the eye", for the sake of explanation. Even if the surface shape of the micro-convex portions described in Patent Document 1 is spherical, it would be difficult to form a focus due to spherical aberration of the eye. This effect also appears near the center of the retina, to which no attention is paid by Patent Document 3.

According to a working example of the present invention, an eyeglass lens that can reduce the influence of spherical aberration of the eye on the effect of suppressing the progression of or mitigating a refractive error, and the relevant technique thereof are provided.

According to another working example of the present invention, an eyeglass lens that can achieve the same effect of suppressing the progression of or mitigating a refractive error, regardless of the amount of spherical aberration of the eye, and the relevant technique thereof are provided.

Solution to Problem

A first aspect of the present invention is directed to an eyeglass lens including a functional region,

wherein the functional region includes:

a base region that causes a luminous flux that has entered an object-side face to exit from an eyeball-side face, enter a pupil of a wearer, and converge on a retina; and

retinal non-convergence regions that cause a luminous flux that has entered the object-side face to exit from the eyeball-side face, and do not cause a luminous flux that has entered the pupil of the wearer to converge on the retina,

at least some of the retinal non-convergence regions are buffer regions that can compensate local negative astigmatism occurring due to spherical aberration of the eye at some positions of a distribution of the astigmatism, and

surfaces of the buffer regions are toric surfaces whose axial direction is a circumferential direction, and are elongated along the circumferential direction in a plan view.

A second aspect of the present invention is directed to the eyeglass lens according to the first aspect,

wherein in a plan view of the functional region, retinal non-convergence regions within a band-shaped region are the buffer regions, the band-shaped region being constituted by a collection of circles having a diameter of 4 mm with centers of the circles passing through a predetermined range of at least one diameter extending from a lens center, and

at least three buffer regions are arranged in a dispersed manner within any one of the circles having the diameter of 4 mm in the band-shaped region.

A third aspect of the present invention is directed to the eyeglass lens according to the second aspect, wherein the buffer regions are dispersed in a manner such that a first interval, which is a length of a line segment connecting centers of two buffer regions, and a second interval, which is a distance between the line segment and a center of another buffer region that is closest to the line segment and whose center is located on a normal to the line segment, are both less than 2 mm.

A fourth aspect of the present invention is directed to the eyeglass lens according to any one of the first to third aspects, wherein astigmatism of the buffer regions has an absolute value of 0.25 to 0.50 D.

A fifth aspect of the present invention is directed to the eyeglass lens according to any one of the first to fourth aspects, wherein the retinal non-convergence regions have a shape protruding from the base region.

A sixth aspect of the present invention is directed to the eyeglass lens according to the fifth aspect, wherein a protrusion distance of the retinal non-convergence regions from the base region is greater than 1.00 $\mu$m.

A seventh aspect of the present invention is directed to the eyeglass lens according to any one of the first to sixth aspects,

wherein the retinal non-convergence regions at least include non-convergence regions A1 and B1, at least the non-convergence region B1 is a buffer region, and

in a plan view, the retinal non-convergence region A1, which is located close to the lens center, is more elongated along the circumferential direction than the retinal non-convergence region B 1, which is located away from the lens center.

An eighth aspect of the present invention is directed to the eyeglass lens according to any one of the first to seventh aspects,

wherein there are two straight lines in a relationship in which, among the retinal non-convergence regions located on each circumference, a retinal non-convergence region located on one straight line passing through the lens center has a larger absolute value of astigmatism, and a retinal non-convergence region located on the other straight line perpendicular to the one straight line and passing through the lens center has a smaller absolute value of astigmatism.

A ninth aspect of the present invention is directed to the eyeglass lens according to the eighth aspect, wherein the eyeglass lens is provided with a mark indicating information that values of astigmatism vary according to circumferential positions in the buffer regions.

A tenth aspect of the present invention is directed to the eyeglass lens according to any one of the first to ninth aspects, further including:

a lens substrate; and

laminated films provided to cover the lens substrate,
wherein the lens substrate includes:

a first substrate-refractive region serving as a basis of the base region; and
second substrate-refractive regions serving as a basis of the retinal non-convergence regions, and surfaces of the second substrate-refractive regions, which serve as a basis of the buffer regions, are toric surfaces whose axial direction is a circumferential direction, and are elongated along the circumferential direction in a plan view.

An eleventh aspect of the present invention is directed to the eyeglass lens according to the tenth aspect,

wherein in a plan view of the lens substrate, the surfaces of the second substrate-refractive regions within a band-shaped region are toric surfaces whose axial direction is a circumferential direction, and are elongated along the circumferential direction in a plan view, the band-shaped region being constituted by a collection of circles having a diameter of 4 mm with centers of the circles passing through a predetermined range of at least one diameter extending from the lens center, and
at least three second substrate-refractive regions are arranged in a dispersed manner within any one of the circles having the diameter of 4 mm in the band-shaped region.

A twelfth aspect of the present invention is directed to the eyeglass lens according to the eleventh aspect, wherein the second substrate-refractive regions are dispersed in a manner such that a third interval, which is a length of a line segment connecting centers of two second substrate-refractive regions, and a fourth interval, which is a distance between the line segment and a center of another second substrate-refractive region that is closest to the line segment and whose center is located on a normal to the line segment, are both less than 2 mm.

A thirteenth aspect of the present invention is directed to the eyeglass lens according to any one of the tenth to twelfth aspects,

wherein the second substrate-refractive regions, which serve as a basis of the retinal non-convergence regions, at least include second substrate-refractive regions a1 and b1,
at least the second substrate-refractive region b1 serves as a basis of the buffer region, and
in a plan view, the second substrate-refractive region b1, which is located away from the lens center, is more elongated along the circumferential direction than the second substrate-refractive region a1, which is located close to the lens center.

A fourteenth aspect of the present invention is directed to the eyeglass lens according to any one of the tenth to thirteenth aspects,
wherein the second substrate-refractive regions have a shape protruding from the first substrate-refractive region.
A fifteenth aspect of the present invention is directed to the eyeglass lens according to the fourteenth aspect, wherein a protrusion distance of the second substrate-refractive regions from the base region is greater than 1.00 $\mu$m.
A sixteenth aspect of the present invention is directed to the eyeglass lens according to any one of the tenth to fifteenth aspects,
wherein at least one of the laminated films has a thickness unevenly distributed around the second substrate-refractive regions, and the buffer regions on each circumference have values of astigmatism that vary according to circumferential positions.
A seventeenth aspect of the present invention is directed to the eyeglass lens according to any one of the tenth to fifteenth aspects, further including
a central clear region enclosed by the annular functional region.
An eighteenth aspect of the present invention is directed to the eyeglass lens according to the seventeenth aspect,
wherein a center of the central clear region is located at a geometrical center of the lens.
A nineteenth aspect of the present invention is directed to the eyeglass lens according to the seventeenth aspect, wherein a center of the central clear region is shifted from a geometrical center of the lens to a nasal side.
A twentieth aspect of the present invention is directed to a method for manufacturing an eyeglass lens provided with a functional region including:

a base region that causes a luminous flux that has entered an object-side face to exit from an eyeball-side face, enter a pupil of a wearer, and converge on a retina; and
retinal non-convergence regions that cause a luminous flux that has entered the object-side face to exit from the eyeball-side face, and do not cause a luminous flux that has entered the pupil of the wearer to converge on the retina,

at least some of the retinal non-convergence regions being buffer regions that compensates local negative astigmatism occurring due to spherical aberration of the eye at some positions of a distribution of the astigmatism, and
the eyeglass lens at least including a lens substrate,
the lens substrate including:

a first substrate-refractive region serving as a basis of the base region; and
second substrate-refractive regions serving as a basis of the retinal non-convergence regions,

the method comprising:

a lathe-processing step of performing lathe-processing on a mold so that surfaces of the second substrate-refractive regions, which serve as a basis of the buffer regions, are toric surfaces whose axial direction is a circumferential direction, and are elongated along the circumferential direction in a plan view; and
a molding step of molding the lens substrate using the lathe-processed mold.

A twenty-first aspect of the present invention is directed to the method according to the twentieth aspect, wherein the lathe-processing step is performed on the mold so that in a plan view of the lens substrate, the surfaces of the second substrate-refractive regions within a band-shaped region are toric surfaces whose axial direction is a circumferential direction, and are elongated along the circumferential direction in a plan view, the band-shaped region being constituted by a collection of circles having a diameter of 4 mm with centers of the circles passing through a predetermined range of at least one diameter extending from the lens center, and so that at least three second substrate-refractive regions are arranged in a dispersed manner within any one of the circles having the diameter of 4 mm in the band-shaped region.

A twenty-second aspect of the present invention is directed to the method according to the twenty-first aspect, wherein the second substrate-refractive regions are dispersed in a manner such that a third interval, which is a length of a line segment connecting centers of two second substrate-refractive regions, and a fourth interval, which is a distance between the line segment and a center of another second substrate-refractive region that is closest to the line segment and whose center is located on a normal to the line segment, are both less than 2 mm.

A twenty-third aspect of the present invention is directed to the method according to any one of the twentieth to twenty-second aspects,

wherein the second substrate-refractive regions, which serve as a basis of the retinal non-convergence regions, at least include second substrate-refractive regions a1 and b1,
at least the second substrate-refractive region b1 serves as a basis of the buffer region, and
the lathe-processing step of performing lathe-processing on the mold is executed so that, when lathe-processing the mold to form the lens substrate, in a plan view, the second substrate-refractive region b1, which is located away from the lens center, is more elongated along the circumferential direction than the second substrate-refractive region a1, which is located close to the lens center.

A twenty-fourth aspect of the present invention is directed to the method according to any one of the twentieth to twenty-third aspects,
wherein in the lathe-processing step, portions of the mold that correspond to the second substrate-refractive regions are recessed with respect to a portion of the mold that corresponds to the first substrate-refractive region, in order for the second substrate-refractive regions to have a shape protruding from the first substrate-refractive region.

A twenty-fifth aspect of the present invention is directed to the method according to the twenty-fourth aspect, wherein distances of the recessed portions are greater than 1.00 $\mu$m.

A twenty-sixth aspect of the present invention is directed to the method according to any one of the twentieth to twenty-fifth aspects, further including

a laminating step of providing laminated films so that the laminated films cover the lens substrate obtained using the lathe-processed mold,
wherein by forming at least one of the laminated films using a dip method, thickness of the film is unevenly distributed around the second substrate-refractive regions, and the buffer regions have values of astigmatism that vary according to the circumferential positions.

A twenty-seventh aspect of the present invention is directed to the method according to the twenty-sixth aspect,

wherein there are two straight lines in a relationship in which, among the retinal non-convergence regions located on each circumference, a retinal non-convergence region located on one straight line passing through the lens center has a larger absolute value of astigmatism, and a retinal non-convergence region located on the other straight line perpendicular to the one straight line and passing through the lens center has a smaller absolute value of astigmatism.

A twenty-eighth aspect of the present invention is directed to the method according to twenty-seventh aspect, further including

a mark adding step of adding, to the eyeglass lens, a mark indicating information that the buffer regions have different values of astigmatism depending on circumferential positions.

A twenty-ninth aspect of the present invention is directed to eyeglasses in which the eyeglass lens according to any one of the first to nineteenth aspects is fitted to a frame.

A thirtieth aspect of the present invention is directed to a method for manufacturing eyeglasses, wherein an orientation of an eyeglass lens is determined based on a magnitude of spherical aberration of an eye of a wearer using the mark of the eyeglass lens according to the ninth aspect as a reference, and the eyeglass lens is fitted to a frame.

A thirty-first aspect of the present invention is directed to a method for designing an eyeglass lens,

wherein a direction of fitting the eyeglass lens according to any one of the first to nineteenth aspects is determined so that assuming, when the eyeglass lens is not worn by a wearer, an absolute value of a difference between astigmatism of light that enters an upper portion of a retina and astigmatism of light that enters a lower portion of the retina as V, and when the eyeglass lens is worn by the wearer, an absolute value of a difference between astigmatism of light that passes through a retinal non-convergence region and enters the upper portion of the retina, and astigmatism of light that enters the lower portion of the retina as V',
V' is greater than V

A thirty-second aspect of the present invention is directed to a method for manufacturing eyeglasses comprising fitting the eyeglass lens to a frame in accordance with an orientation determined by the design method according to the thirty-first aspect.

With respect to the size of the retinal non-convergence regions, the following conditions are preferably satisfied.

The relative frequency of the retinal non-convergence regions to the base area is focused on. The absolute value of this relative frequency is defined as L (unit: D). When a retinal non-convergence region is elongated in a circumferential direction, astigmatism of 0.25 to 0.50 D can be given if a ratio M of the length of the long side (circumferential length in a plan view) to the length of the short side (radial length in a plan view) of the retinal non-convergence region 3a satisfies the following expression.

$$0.25 < L\text{-}L/M^2 < 0.50$$

where L is likely to be 3.00 to 5.00 D, in which case M would be about 1.025 to 1.085.

Advantageous Effects of Invention

According to a working example of the present invention, it is possible to reduce the influence of spherical aberration of the eye on the effect of suppressing the progression of or mitigating a refractive error.

According to another working example of the present invention, it is possible to achieve the same effect of suppressing the progression of or mitigating a refractive error, regardless of the amount of spherical aberration of the eye.

Brief Description of Drawings

FIG. 1A is a typical wavefront map of the eye having a spherical aberration.
FIG. 1B is a diagram showing negative local astigmatism relative to FIG. 1A, with hatch arrows.
FIG. 1C is a diagram showing a distribution of absolute values of astigmatism (vertical axis) in the horizontal cross-section passing through the center of the eye (distance from the center is denoted by a sign H: horizontal axis).
FIG. 2A is a graph assuming a pupil having a spherical aberration of zero and non-aberrant (spherical) second refractive regions, in which the Visual Strehl ratio based on OTF (VSOTF) is plotted on the vertical axis and the defocus amount (unit: diopter (D), where zero is the retinal position) is plotted on the horizontal axis.
FIG. 2B is a graph similar to FIG. 2A, assuming a pupil having a spherical aberration whose absolute value is 0.080 $\mu$m and non-aberrant second refractive regions (spherical shape).

FIG. 2C is a graph similar to FIG. 2A, assuming a pupil having a spherical aberration whose absolute value is 0.080 $\mu$m and aberrant second refractive regions.

FIG. 3A is a diagram in which the size of the eyeglass lens of FIG. 2C (right figure) is compared to the size of the pupil (lower left figure), with the axial directions of astigmatism included in the second refractive regions indicated by white arrows.

FIG. 3B illustrates the eyeglass lens according to FIG. 2C (left figure) and illustrates, in an enlarged diagram, the axial directions of astigmatism (white arrows) included in the second refractive regions of the eyeglass lens of FIG. 2C and the axial directions of astigmatism (hatch arrows) of the eye.

FIG. 4A illustrates a layout of the second refractive regions that satisfies requirements of dispersion defined in an aspect of the present invention.

FIG. 4B illustrates a layout of the second refractive regions that do not satisfy the requirements of dispersion defined in the aspect of the present invention.

FIG. 5A is a diagram similar to the right figure in FIG. 3A, illustrating the axial directions of astigmatism included in the second refractive regions with white arrows.

FIG. 5B is a diagram illustrating the axial directions of astigmatism included in second substrate-refractive regions caused by film deposition using a dip method, with white arrows.

FIG. 5C is a diagram illustrating the axial directions of astigmatism included in the second refractive regions caused by film deposition on the eyeglass lens of FIG. 5A using a dip method, with white arrows, and the amount of astigmatism with the lengths of the white arrows.

FIG. 6A is a diagram similar to the right figure in FIG. 3A, with the position through which the line of vision frequently passes when the eyeglass lens is worn indicated by an arrow.

FIG. 6B is a diagram similar to FIG. 5C, illustrating a state in which the orientation of the eyeglass lens is determined so that buffer regions with the maximum astigmatism are arranged at positions through which the line of vision frequently passes, the orientation being intended for children having a spherical aberration of the eye whose absolute value is 0.080 $\mu$m.

FIG. 6C is a diagram illustrating a state in which the orientation of the eyeglass lens is determined so that second refractive regions, where astigmatism is zero, are arranged at positions through which the line of vision frequently passes, the orientation being intended for children having a spherical aberration of the eye of zero.

FIG. 7 is a diagram illustrating an example of a definition of the boundary between a functional region and a central clear region, that is, an example of a definition of the boundary between the functional region and an outer clear region.

Description of Embodiments

Hereinafter, an embodiment of the present invention will be described. The following description based on the drawings is illustrative, and the present invention is not limited to the illustrated aspect.

The eyeglass lens referred to in the present specification has an object-side face and an eyeball-side face. The "object-side face" is a surface that is located on the object side when a wearer wears a pair of glasses including the eyeglass lens, and the "eyeball-side face" is a surface that is located on the opposite side, that is, the eyeball side when the wearer wears the pair of glasses including the eyeglass lens. This relationship also applies to a lens substrate, which serves as the base of the eyeglass lens. That is, the lens substrate also has an object-side face and an eyeball-side face.

In the present specification, the horizontal direction in a state in which the eyeglass lens is worn is defined as "x direction", the vertical (up-down) direction is defined as "y direction", and the direction that is thickness direction of the eyeglass lens and is perpendicular to the x direction and the y direction is defined as "z direction". The z direction is also the optical axis direction of the eyeglass lens. The origin is defined as the lens center. Note that the lens center refers to the optical center or geometric center of the eyeglass lens. In the present specification, a case where the optical center and the geometric center substantially match each other is exemplified.

The rightward direction (3 o'clock) toward the wearer is +X, the leftward direction (9 o'clock) is -X, the upward direction (0 o'clock) is +Y, the downward direction (6 o'clock) is -Y, the object-side direction is -Z, and the direction opposite thereto (backward direction) is +Z. In the present specification, "in a plan view" refers to a state viewed from the -Z direction to the +Z direction. With respect to the reference signs of the Z direction, the same applies to the later-described defocus power.

In the figures of the present application, a right eye lens viewed in a plan view is shown as an example, with the nasal-side direction when the right eye lens is worn defined as the +X direction and the ear-side direction defined as the -X direction.

Note that when the functional region is provided only on the topmost surface on the eyeball side, it is also possible to consider the state where the lens is viewed from the -Z direction to the +Z direction as a plan view. Hereinafter, when discussing a "position" such as the eye point and geometric center in the eyeglass lens, it refers to the position viewed in a plan view, unless otherwise noted.

In the present specification, "to" in relation to values refers to a predetermined value or more and a predetermined value or less. Hereinafter, reference signs are given only to items that appear for the first time and are omitted thereafter.

<Findings Leading to Present Invention>

The inventors of the present invention considered the spherical aberration of the eye.

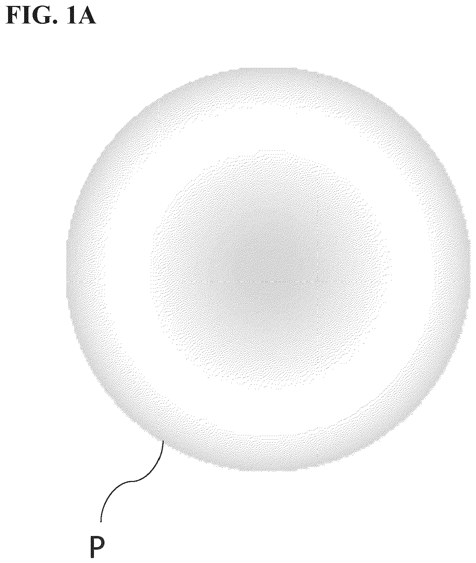

FIG. 1A is a typical wavefront map of the eye having a spherical aberration.

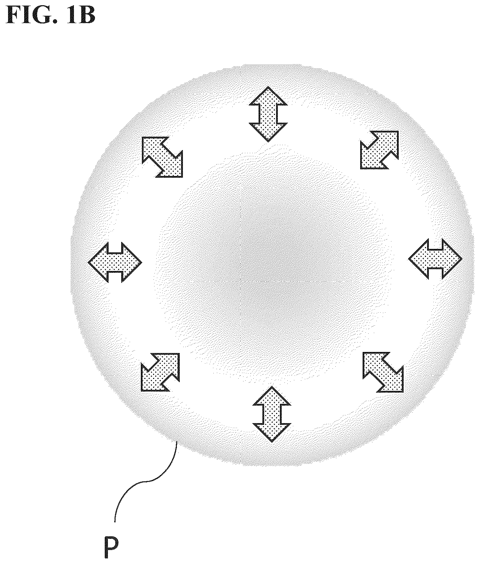

FIG. 1B is a diagram showing negative local astigmatism relative to FIG. 1A, with hatch arrows.

The up-down direction refers to the vertical direction, and the left-right direction refers to the horizontal direction. The diameter of the wavefront map is 4 mm, assuming a typical pupil diameter. The darker the color in the map is, the more delayed the wavefront is. A position in the map at which the color changes quadratically means that it has a local degree in the radial direction. That is to say, the eye shown in FIG. 1A has negative local astigmatism as indicated by the hatch arrows in FIG. 1B.

Note that as the value of a spherical aberration, an absolute value of 0.080 $\mu$m is assumed in the present specification. The reasons for this are as follows.

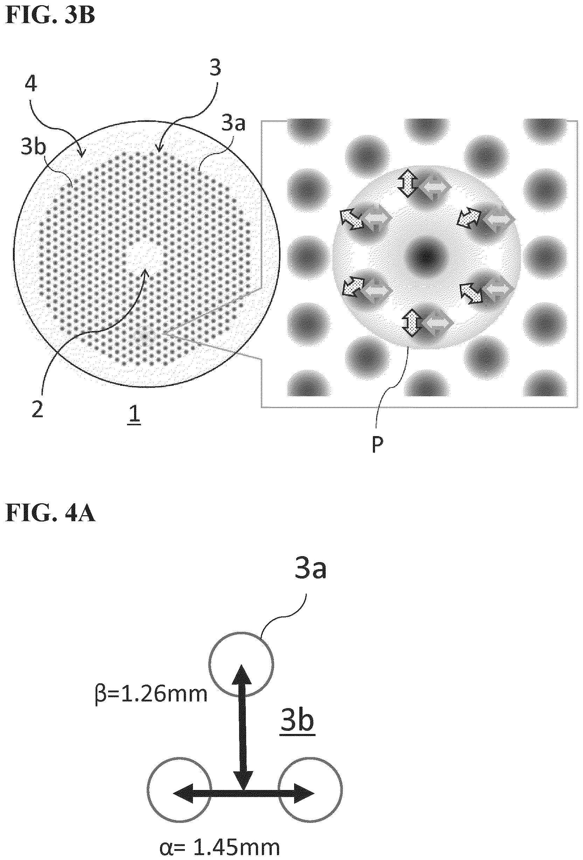

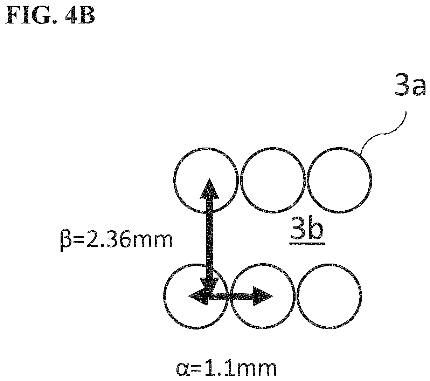

Spherical aberrations of the eyes of children have been reported in the following document (especially, Figure 4).

"Athaide HV, Campos M, Costa C. Study of ocular aberrations with age. Arq BrasOftalmol. 2009 Sep-Oct;72(5):617-21. doi: 10.1590/s0004-27492009000500003. PMID:20027396."

According to the document, spherical aberrations of the eyes of children are distributed in the interquartile range from -0.08 to +0.12 $\mu$m. The results of the above-described document are values measured with a pupil diameter, which is a mydriatic pupil diameter, of 6.5 mm, and need to be converted into typical pupil diameter of 4 mm. The pupil diameter and the spherical aberration are substantially proportional. Therefore, at a pupil diameter of 4 mm, the spherical aberration of a child's eye is estimated to be -0.05 to +0.08 $\mu$m in the interquartile range. This is in the interquartile range, and children with spherical aberrations larger than +0.08 $\mu$m and spherical aberrations smaller than -0.05 $\mu$m correspond to the remainder of the interquartile range (i.e., nearly half of children). In other words, nearly half of children have an absolute value of spherical aberration greater than 0.08 $\mu$m.

For the reasons above, as values of spherical aberration, an absolute value of 0.080 $\mu$m is assumed in the present specification.

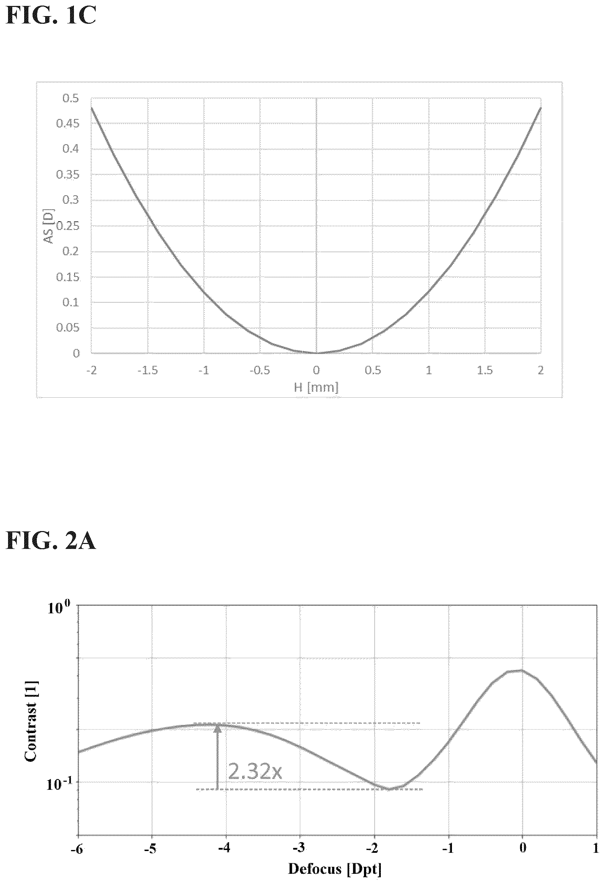

FIG. 1C is a diagram showing a distribution of absolute values of astigmatism (vertical axis) in the horizontal cross-section passing through the center of the eye (distance from the center is denoted by a sign H: horizontal axis).

According to FIG. 1C, astigmatism of about 0.25 to 0.50D (unit: diopter) occurs in the vicinity of the outer edge of the eye. Theoretically, if the above-described second refractive region can compensate this degree of astigmatism, the problem of difficulty in forming a focus can be solved.

On the other hand, as shown in FIG. 1B, local astigmatism has axial directions along the radial direction of the eye. That is, local astigmatism does not have a uniform axial direction. The "axial direction" in the present specification refers to the direction of the maximum or minimum refractive power in a 360° azimuth from a given position. The "axial direction" in the present specification refers to a direction in which refractive power is maximum in the case of positive astigmatism and refers to a direction in which refractive power is minimum in the case of negative astigmatism. However, in the present specification, in some qualitative discussions where it is not important whether it refers to the maximum or minimum, the sign of astigmatism is omitted. Also, when it is described that astigmatism increases, this means that the absolute value of astigmatism increases.

The inventors of the present invention considered a configuration for compensating local astigmatism of the eye. Prior to the consideration, various tests were conducted.

FIG. 2A is a graph assuming a pupil having a spherical aberration of zero and non-aberrant (spherical) second refractive regions, in which the Visual Strehl ratio based on OTF (VSOTF) is plotted on the vertical axis and the defocus amount (unit: diopter (D), where zero is the retinal position) is plotted on the horizontal axis.

In the present specification, with respect to the defocus amount on the horizontal axis, a negative value means the forward side of the retina (side of an object to be viewed) and a positive value means the backward of the retina.

VSOTF is a scalar quantity that takes into consideration contrast sensitivity characteristics that may result from the retinal structure or the nerve system. VSOTF is the sum of the real parts of OTF weighted taking into consideration sensitivity characteristics of the respective spatial frequencies of the eye. The specific expression is as follows.

[Math. 1]

$$VSOTF = \frac{\int_{-\infty}^{+\infty} \int_{-\infty}^{+\infty} CSF(r,s) \cdot Re[OTF(r,s)]drds}{\int_{-\infty}^{+\infty} \int_{-\infty}^{+\infty} CSF(r,s) \cdot OTF_{DL}(r,s)drds}$$

where OTF of the numerator is Optical Transfer Function (OTF) of the actual lens. OTFDL of the denominator is OTF when supposing the lens has no aberration.

CSF is the contrast sensitivity function to the spatial frequency of human vision. CSF has a peak sensitivity at a sufficiently low frequency compared to the cutoff frequency.

OTF is one of scales for evaluating the lens performance and is a complex-valued index that expresses how faithfully the contrast of a visible object can be reproduced on the image surface, as a spatial frequency characteristic. A large absolute value of OTF means a high contrast perceived by the wearer when viewing an object through the lens, and a small argument of OTF means a small image misalignment. A large value of VSOTF, which is a weighted sum of OTF, means that the image is less blurred and has less bleeding, and that the energy concentration is high.

VSOTF is described in the following document "Thibos LN, Hong X, Bradley A, Applegate RA. Accuracy and precision of objective refraction from wavefront aberrations. J Vis. 2004 Apr 23;4(4):329-51.", and thus the description is omitted herein.

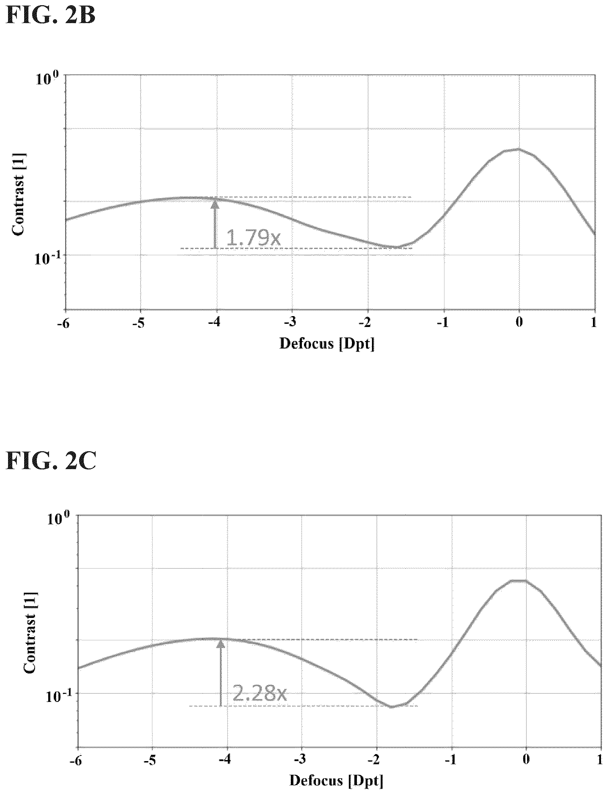

FIG. 2B is a graph similar to FIG. 2A, assuming a pupil having a spherical aberration whose absolute value is 0.080 μm and non-aberrant second refractive regions (spherical shape).

As shown in FIG. 2A, due to a first refractive region (base region), the contrast has the maximum value when the horizontal axis (defocus amount) is zero. Also, due to the second refractive region, the contrast is the local maximum when the horizontal axis (defocus amount) is near -4.0 D. As a result of the wearer of the eyeglass lens sensing the concentration of light that brings the local maximum contrast, an increase in eyeball length is suppressed, leading to suppressing the progression of myopia. The first refractive region (base region) can be a region with the prescription refractive power.

On the other hand, the wearer senses the concentration of light relatively according to Weber-Fechner's law. What is important is not the absolute value of the local maximum contrast, but rather the difference between the local maximum value of contrast caused by the second refractive region and the low contrast (local minimum value) between the maximum value and the local maximum value. In the figures, the arrow indicates this difference, which is hereinafter referred to also as "contrast ratio". In FIGS. 2A to 2C, the contrast ratios are denoted by values of the local maximum value/local minimum value.

As shown in FIG. 2B, due to spherical aberration of the eye, the contrast ratio is reduced compared to in FIG. 2A.

Note however that, as shown in FIG. 1B, local astigmatism has axial directions along the radial direction of the eye. That is, local astigmatism does not have one axial direction (for example, the horizontal direction). Even if the second refractive region has astigmatism in one axial direction, it would not compensate all local astigmatisms of the eye, but only some even if it is possible. To take one specific example, even if the second refractive region uniformly has astigmatism the axial direction of which is a rightward direction toward the wearer, only some local astigmatisms of the eye the axial direction of which is an up-down direction would be compensated.

On the other hand, the inventors of the present invention considered the significance in compensation at some positions in the distribution of local astigmatism of the eye.

FIG. 2C is a graph similar to FIG. 2A, assuming a pupil having a spherical aberration whose absolute value is 0.080 μm and aberrant second refractive regions. Detailed test conditions will be described in items of later-described working example. Note that in FIG. 2C, in the aberrant second refractive regions, negative astigmatism is provided, the absolute value of the astigmatism (hereinafter referred to as "amount of astigmatism", which is negative, unless otherwise noted) is 0.40 D, the surfaces of the second refractive regions are toric surfaces whose axial direction is the circumferential direction and have an elongated elliptical shape along the circumferential direction in a plan view.

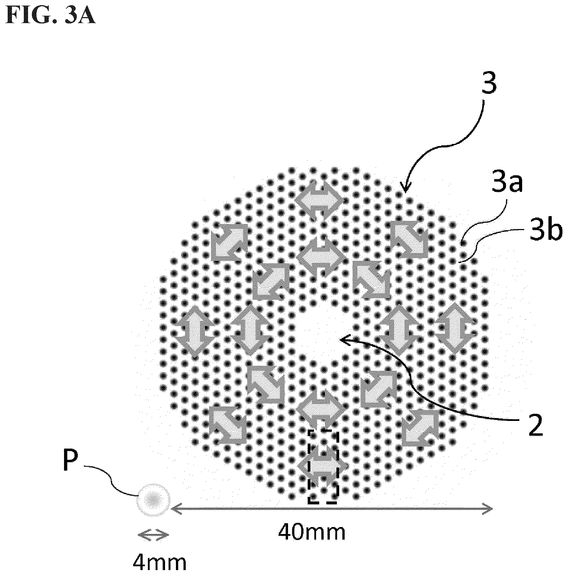

FIG. 3A is a diagram in which the size of the eyeglass lens of FIG. 2C (right figure) is compared to the size of the pupil (lower left figure), with the axial directions of astigmatism included in the second refractive regions indicated by white arrows.

The dimensional ratio of the second refractive regions to the entire eyeglass lens in the illustrative drawings of the present invention is not necessarily the actual dimensional ratio but is only to provide an overview of one aspect of the invention.

FIG. 3B illustrates the eyeglass lens according to FIG. 2C (left figure) and illustrates, in an enlarged diagram, the axial directions of astigmatism (white arrows) included in the second refractive regions of the eyeglass lens of FIG. 2C and the axial directions of astigmatism (hatch arrows) of the eye. In this enlarged diagram, local astigmatism is compensated in the vicinity of the upper and lower outer edges.

Although the contrast ratio should decrease due to spherical aberration of the eye, as shown in FIG. 2C, the above-described second refractive regions make it possible to maintain the contrast ratio at a substantially the same level as in FIG. 2A. That is, as shown in the right figure of FIG. 3B, it was found that due to compensation of local astigmatism of the eye at some positions in the distribution thereof, it is possible to suppress a reduction in the contrast ratio.

"Compensation" in the present specification refers to a phenomenon in which the absolute value of negative astigmatism in the vicinity of the outer edge of the eye is reduced by the above second refractive regions (hereinafter, "buffer regions") until it is 0.12 D or less (preferably 0.10 D or less and more preferably 0.05 D or less) when light enters the pupil of the wearer.

The "toric surface" in the present specification literally includes the toric shape itself, as well as a surface obtained by making a toric shape into an aspherical surface (a composite of a toric and an aspheric surface). The "toric surface" in the present specification is composed of an aspheric surface whose curvature factor varies with the distance from the center.

The eyeglass lens, which is an aspect of the present invention, has been accomplished based on the above findings.

Furthermore, to manufacture the eyeglass lens, preferably, a lens substrate is obtained through molding using a mold. The inventors of the present invention have found that by performing lathe processing with appropriate control on a mold used for molding, the shape of the eyeglass lens, which is one aspect of the invention, can be ideally realized.

The following aspect of the present invention has been accomplished based on the above findings.

<Eyeglass Lens>

The eyeglass lens according to one aspect of the present invention has the following configuration.

"An eyeglass lens including a functional region,

wherein the functional region includes:

a base region 3b that causes a luminous flux that has entered an object-side face to exit from an eyeball-side face, enter a pupil of a wearer, and converge on a retina; and
retinal non-convergence regions 3a that cause a luminous flux that has entered the object-side face to exit from the eyeball-side face, and do not cause a luminous flux that has entered the pupil of the wearer to converge on the retina,

at least some of the retinal non-convergence regions 3a are buffer regions that can compensate local negative astigmatism occurring due to spherical aberration of the eye at some positions of a distribution of the astigmatism, and surfaces of the buffer regions are toric surfaces whose axial direction is a circumferential direction, and are elongated along the circumferential direction in a plan view."

As described as the foregoing findings, although all the local astigmatisms of the eye cannot be compensated and only some can be compensated even if it is possible, the reduction of the above contrast ratio can be suppressed. As a result, the eyeglass lens according to one aspect of the present invention can reduce the influence of spherical aberration of the eye on the effect of suppressing the progression of or mitigating a refractive error.

In the present specification, unless otherwise noted, "(surface) shape" of the eyeglass lens refers to, if a film is formed on the lens substrate to configure the eyeglass lens, the surface shape of the film, and refers to, if the eyeglass lens is the lens substrate itself, the surface shape of the lens substrate.

In a plan view of the functional region, retinal non-convergence regions 3a within a band-shaped region may be defined as buffer regions, the band-shaped region being constituted by a collection of circles having a diameter of 4 mm with the centers of the circles passing through a predetermined range of at least one diameter extending from the lens center. For example, retinal non-convergence regions 3a within a dashed enclosure in FIG. 3A may be defined as buffer regions. That is, the retinal non-convergence regions 3a within the dashed enclosure in FIG. 3A may have astigmatism (the amount of which is 0.25 to 0.50 D) in which the axial direction is a circumferential direction. In other words, the retinal non-convergence regions 3a located above the dashed enclosure in FIG. 3A may have no astigmatism (i.e., may be spherical) or may be, even if they have any, less than 0.25 D.

"A predetermined range of at least one diameter extending from the lens center" is not limited, and may include a part of the functional region from its end closest to the lens center to its end farthest to the lens center.

It is also possible that retinal non-convergence regions 3a within a band-shaped region in a predetermined range of all diameters, instead of only one diameter, are defined as buffer regions. On the other hand, there may be no buffer region in a band-shaped region of some diameters. The eyeglass lens obtained by film deposition using a later-described dip method corresponds to the example.

In addition, at least three buffer regions may be arranged in a dispersed manner within any one of the circles having the diameter of 4 mm in the band-shaped region.

That is, as a result of the buffer regions being dispersed while gathering together in at least one band-shaped region extending from the center of the lens, it is easier, at a position where there is local negative astigmatism in the eye, to compensate the astigmatism.

The above-described dispersion may be defined as follows.

The dispersion of buffer regions may be such that a first interval $\alpha$, which is the length of a line segment connecting the centers of two buffer regions, and a second interval $\beta$, which is the distance between the line segment and the center of another buffer region that is closest to the line segment and whose center is located on a normal to the line segment, are both less than 2 mm. The following will describe a case where the requirements of dispersion are satisfied, and a case where the requirements are not satisfied.

FIG. 4A is a diagram illustrating a layout of second refractive regions that satisfies the requirements of dispersion defined in one aspect of the present invention.

FIG. 4B is a diagram illustrating a layout of second refractive regions that do not satisfy the requirements of dispersion defined in one aspect of the present invention.

The retinal non-convergence regions 3a may have a shape protruding from the base region 3b. That is, the retinal non-convergence regions 3a may be convex regions. In this case, the retinal non-convergence regions 3a can achieve the effects of suppressing the progression of myopia.

The eyeglass lens may include: a lens substrate; and laminated films provided to cover the lens substrate.

The lens substrate may include:

a first substrate-refractive region serving as a basis of the base region 3b; and
second substrate-refractive regions serving as a basis of the retinal non-convergence regions 3a, and
surfaces of the second substrate-refractive regions, which serve as a basis of the buffer regions, may be toric surfaces whose axial direction is a circumferential direction, and are elongated along the circumferential direction in a plan view.

That is to say, in the stage of the lens substrate, the regions that serve as bases of the base region 3b, the retinal non-convergence regions 3a, and the base region may be formed.

Even if the laminated film is provided to cover the lens substrate, a top surface shape is obtained that follows the surface shape of the lens substrate to some extent, making it possible to achieve a configuration of the eyeglass lens according to one aspect of the present invention. Therefore, the second substrate-refractive regions may have a shape protruding from the first substrate-refractive region.

The appropriateness of the above-described band-shaped region and dispersion defined for the eyeglass lens may be applied to the lens substrate. The specific example is as follows.

In a plan view of the lens substrate, the surfaces of the second substrate-refractive regions within a band-shaped region may be toric surfaces whose axial direction is a circumferential direction, and may be elongated along the circumferential direction in a plan view, the band-shaped region being constituted by a collection of circles having a diameter of 4 mm with the centers of the circles passing through a predetermined range of at least one diameter extending from the lens center. In addition, at least three second substrate-refractive regions may be arranged in a dispersed manner within any one of the circles having the diameter of 4 mm in the band-shaped region.

The dispersion of the second substrate-refractive regions may be such that a third interval, which is the length of a line segment connecting the centers of two second substrate-refractive regions, and a fourth interval, which is the distance between the line segment and the center of another second substrate-refractive region that is closest to the line segment and whose center is located on a normal to the line segment, are both less than 2 mm.

<Eyeglass Lens Manufacturing Method>

The following will describe an eyeglass lens manufacturing method according to one aspect of the present invention, as well as preferred examples and modifications of the eyeglass lens. Details of content such as the material of the lens substrate will be described later.

The eyeglass lens manufacturing method according to one aspect of the present invention includes:

a lathe-processing step of performing lathe processing on a mold so that surfaces of the second substrate-refractive regions, which serve as a basis of the buffer regions, are toric surfaces whose axial direction is a circumferential direction, and are elongated along the circumferential direction in a plan view; and
a molding step of molding the lens substrate using the lathe-processed mold.

[1. Lathe-Processing Step on Mold]

According to one aspect of the present invention, a lens substrate is produced by injection molding using a mold. To obtain a lens substrate having the above-described surface shape, it is necessary to process the mold so that it has a surface shape inverted with respect to the surface shape of the lens substrate. As an example, when the second substrate-refractive regions are convex regions, it is necessary to form concave regions on the mold.

The lathe-processing step may be performed on the mold so as to realize the second substrate-refractive regions that are formed as multiple independent island-shaped regions.

As described above, the surfaces of the second substrate-refractive regions (convex regions), which serve as a basis of the buffer regions, need to be toric surfaces whose axial direction is a circumferential direction. Therefore, concave regions of toric surfaces also need to be formed on the mold.

One of significant characteristics of the eyeglass lens manufacturing method according to one aspect of the present invention is to form regions that correspond to the second substrate-refractive regions on the mold using lathe processing.

In the lathe processing according to one aspect of the present invention, by repeatedly bringing a cutting tool called a bite into contact with the mold for predetermined time while the mold is rotating at high speed, predetermined shapes are engraved in the mold. When concave regions of toric surfaces are formed in the mold, the radial and circumferential curves in the concave regions of the mold can be set as appropriate, based on the tip shape of the bite, the rotational speed of the mold, the contact time of the bite, and the like. This means that the amount of astigmatism caused by the toric surface of the concave regions of the mold can be set as appropriate. Furthermore, the amount of astigmatism can be increased by increasing the rotational speed of the mold during the lathe processing.

In any case, the axial direction of astigmatism (maximum or minimum refractive power) caused by the second substrate-refractive regions (convex regions) obtained by the concave regions is the circumferential direction.

Since lathe processing is employed when forming the concave regions of the toric surfaces in the mold as described above, the concave regions are easily processed to be elongated along the circumferential direction (i.e., in the rotational direction of the mold). The expression "the concave regions being elongated in the circumferential direction" means that negative astigmatism is provided with the circumferential axis serving as the axial direction. The further away from the center of rotation of the lathe processing (i.e., the closer to the outer edge of the mold), the easier the mold is processed to be elongated. This means that it is easier to make the second substrate-refractive regions (convex regions) obtained by the concave regions elongated.

Also, since the amount of astigmatism can be set as appropriate as described above, it can be said that the elongated shape is a shape to which astigmatism is likely to be added. Due to the elongated shape in the circumferential direction, it is easier for light that has passed through the buffer regions at the eyeglass lens stage to enter the pupil having a diameter of 4 mm, compared to a case where the buffer regions are perfect circles in a plan view, thereby increasing the possibility of compensating astigmatism of the eye.

The mold may have a plurality of concave regions having the same shape, or all of the concave regions may have the same shape. Also, in view of the above characteristics of lathe processing, the concave regions may be made more elongated in the circumferential direction toward the outer edge of the mold. The concave regions near the center of rotation of the mold may be made spherical so that the retinal non-convergence regions 3a located above the dashed enclosure in FIG. 3A are spherical.

Note that with respect to the size of the obtained retinal non-convergence regions 3a, the following conditions are preferably satisfied.

The relative frequency of the retinal non-convergence regions 3a to the base region 3b is focused on. The absolute value of this relative frequency is defined as L (unit: D). When a retinal non-convergence region 3a is elongated in the circumferential direction, astigmatism of 0.25 to 0.50 D can be given if a ratio M of the length of the long side (circumferential length in a plan view) to the length of the short side (radial length in a plan view) of the retinal non-convergence region 3a satisfies the following expression.

$$0.25 < L\text{-}L/M^2 < 0.50$$

where L is likely to be 3.00 to 5.00 D, in which case M would be about 1.025 to 1.085.

[2. Molding Step of Molding Lens Substrate]

A lens substrate is formed using the mold subjected to the lathe processing step. There is no limitation on the molding method, and it is sufficient to employ injection molding.

The obtained lens substrate preferably satisfies the following conditions.

The second substrate-refractive regions, which serve as a basis of the retinal non-convergence regions 3a, at least include second substrate-refractive regions a1 and b1,

> at least the second substrate-refractive region b1 serves as a basis of the buffer region, and
> in a plan view, the second substrate-refractive region a1, which is located close to the lens center, is more elongated along the circumferential direction than the second substrate-refractive region b1, which is located away from the lens center.

In the case of the eyeglass lens 1, the above-described conditions are as follows.

"The retinal non-convergence regions 3a at least include non-convergence regions A1 and B1,

> at least the non-convergence region B1 is a buffer region, and
> in a plan view, the retinal non-convergence region A1, which is located close to the lens center, is more elongated along the circumferential direction than the retinal non-convergence region B1, which is located away from the lens center."

A configuration is also possible in which, in a plan view, the further away from the lens center, the second substrate-refractive regions become elongated along the circumferential direction and become more toric away from the spherical surfaces.

[3. Laminating Step]

A laminating step of providing laminated films so that they cover the lens substrate obtained using the lathe-processed mold.

Examples of the types of laminated films are given below, and it is also possible to change the amount of astigmatism in the buffer regions of each stage of the eyeglass lens, for each of the buffer regions arranged in a row in the circumferential direction of the eyeglass lens, based on which method is used to manufacture the films.

For example, by forming at least one (here, a hard coat film is conceivable) of the laminated films through a dip method using dip solution with predetermined physical properties, it is also possible to unevenly distribute the thicknesses of the film around the second substrate-refractive regions so that the buffer regions have different values of astigmatism depending on the circumferential positions.

With respect to the dip method, the entire description in WO 2021/131457 can be incorporated herein by reference.

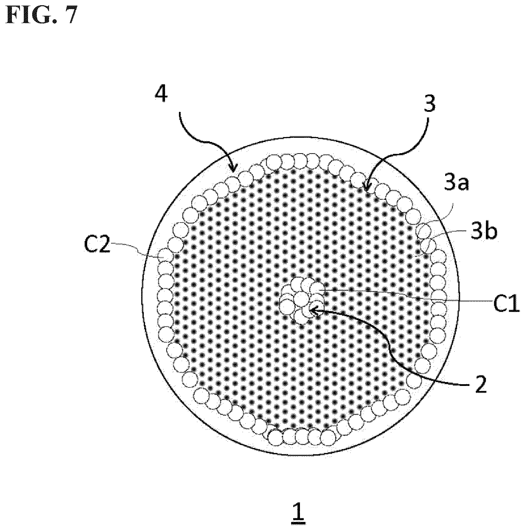

As shown in FIG. 7 of this publication, when the center of the second refractive region (convex region) of the lens substrate is in a hexagonal configuration, if the dip method is employed to deposit the film under predetermined conditions, the film thickness will be maximum at a clockwise rotation angle of 90° (3 o'clock) and 270° (9 o'clock) from the 0 o'clock direction, which is a pulling direction of the dip method, when viewed from the center of the second refractive region (convex region) of the lens substrate (+X and -X directions in the present specification, i.e., the horizontal direction, and left-right direction), and the film thickness will be minimum at a clockwise rotation angle of 180° (6 o'clock) and 360° (0 o'clock) from 0 o'clock (-Y and +Y directions in the present specification, i.e., the vertical direction, and up-down direction).

The fact that there are positions having the maximum and minimum film thicknesses in and around the second refractive regions of the lens substrate means that the amounts of astigmatism in the buffer regions of the eventually obtained eyeglass lens have changed from the amounts of astigmatism in the second refractive regions of the lens substrate. Moreover, in association with the employment of the dip method, it means that a uniform change in the amount of astigmatism in a uniform axial direction (in this case horizontal direction) is added to all the second refractive regions of the lens substrate.

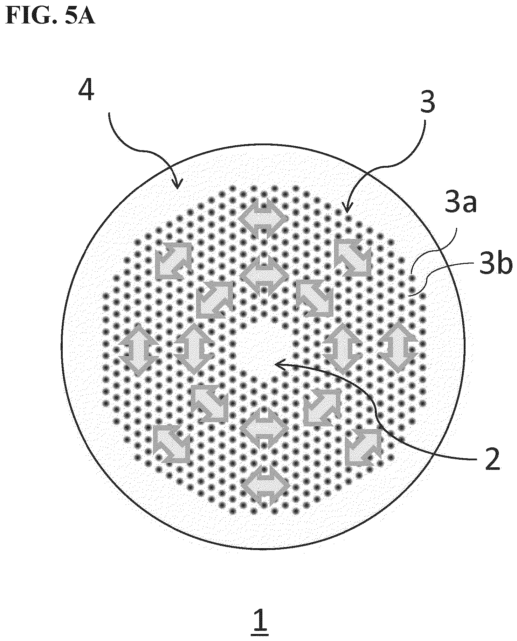

FIG. 5A is a diagram similar to the right figure in FIG. 3A, with the axial directions of astigmatism included in the second refractive regions indicated by white arrows.

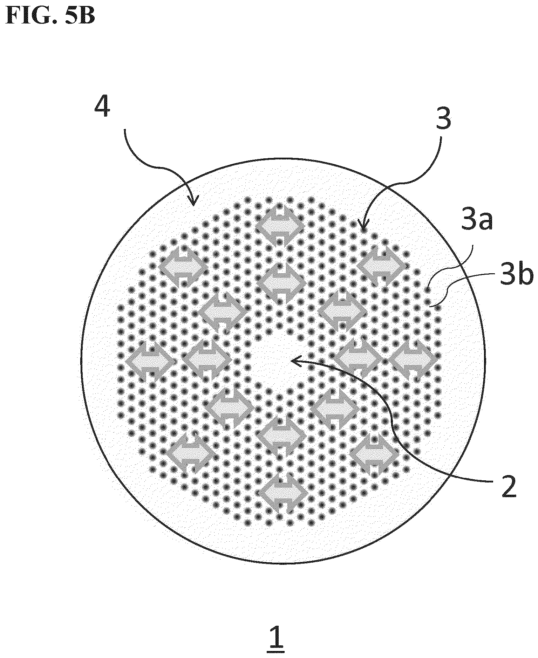

FIG. 5B is a diagram showing the axial directions of astigmatism included in the second substrate-refractive regions by employing the dip method under the predetermined conditions to deposit the film.

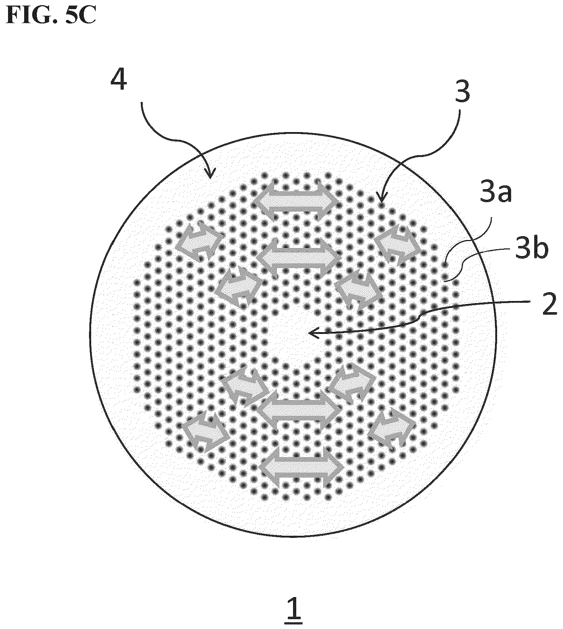

FIG. 5C is a diagram showing the axial directions of astigmatism included in the second refractive regions by employing the dip method on the eyeglass lens of FIG. 5A to deposit the film, with the white arrows, and the amounts of astigmatism with the lengths of the white arrows.

As shown in FIG. 5B, when the above-described dip method is employed, the film thickness is maximal in the left-right direction in the second substrate-refractive regions, and conversely, the film thickness is minimal in the up-down direction, which is the pulling direction. As a result, astigmatism in which the axial direction (direction of maximum refractive power) is the horizontal direction is expected to be present in the second substrate-refractive regions.

Then, as shown in FIG. 5A, each second substrate-refractive region has a predetermined amount of astigmatism in which the axial direction is the circumferential direction. The astigmatism caused by film deposition using the dip method is combined with the astigmatism already present in the second substrate-refractive regions. As a result, the second refractive regions (i.e., spherical aberration resolvable regions) provided with astigmatism of the axial direction and the amount as shown in FIG. 5C are obtained. The configuration shown in FIG. 5C may be expressed as follows.

"There are two straight lines in a relationship in which, among the retinal non-convergence regions 3a located on each circumference, a retinal non-convergence region 3a located on a straight line (up-down line in FIG. 5C) passing through the lens center has a larger absolute value of astigmatism, and a retinal non-convergence region 3a located on a straight line (left-right line in FIG. 5C) perpendicular to that straight line and passing through the lens center has a smaller absolute value of astigmatism."

To illustrate taking specific numerical values as examples, in FIG. 5A, by defining all the second substrate-refractive regions as having a toric surface whose axial direction is the circumferential direction and as being elongated in the circumferential direction when viewed in a plan view, the second substrate-refractive regions have astigmatism of -0.20 D in which the axial direction is the circumferential direction. Also, in FIG. 5B, by film deposition using the dip method, astigmatism of -0.20 D in which the axial direction is the left-right direction is added. As a result, as shown in FIG. 5C, a second refractive region (i.e., a spherical aberration resolvable region) is obtained where the amount of astigmatism is maximum in the up-down direction from the lens center of the eyeglass lens. On the other hand, a second refractive region is obtained where the amount of astigmatism is minimum (zero in FIG. 5C) in the left-right direction from the lens center of the eyeglass lens. The reason for this is that as shown in FIG. 5A, in the second substrate-refractive regions located in the left-right direction from the lens center of the eyeglass lens, the circumferential direction is the up-down direction and astigmatism is compensated by astigmatism in the left-right direction shown in FIG. 5B.

Note here that the maximum and minimum amounts of astigmatism mean that the amounts of astigmatism in the second refractive regions are maximum and minimum when viewed in the circumferential direction at a predetermined diameter, or that the average amounts of astigmatism in the above-described band-shaped region are maximum and minimum in all rotational directions from the lens center.

In order to achieve the compensation between amounts of astigmatism, it is preferable that the amount of astigmatism provided in the lathe-processing step and the amount of astigmatism provided by film deposition using the dip method during the laminating step be the same. Specifically, the difference in the amount of both astigmatisms is preferably 0.125 D or less (more preferably, 0.12 D and 0.06D or less).

By film deposition using the dip method, as shown in FIG. 5C, the functional region can be divided into spherical aberration resolvable regions with high astigmatism, spherical aberration resolvable regions with low astigmatism, and second refractive regions with zero astigmatism.

The division may be performed in fan-shaped regions between two diameters extending from the lens center.

In FIG. 5C, at least the clockwise rotation angle in the range of -15 to +15° from the lens center across the 0 o'clock direction, and the rotation angle in the range of 165 to 195° across the 6 o'clock direction may be set as the spherical aberration resolvable regions for high astigmatism.

On the other hand, at least the rotation angle in the range of 75 to 105° from the lens center across the 3 o'clock direction and the rotation angle in the range of 255 to 285° across the 9 o'clock direction may be set to be the second refractive regions with zero astigmatism.

Fan-shaped regions that are neither of these may be set to be the spherical aberration resolvable regions of low astigmatism.

There is no limitation on the amount of astigmatism in the retinal non-convergence region 3a between the area of large absolute value of astigmatism (up-down line in FIG. 5C) and the area of small absolute value (left-right line in FIG. 5C), and, for example, the absolute value may be monotonically decreased along the circumferential direction from the area with large absolute values to the area with small absolute values, or the absolute value may be decreased while repeatedly decreasing and increasing.

According to the eyeglass lens shown in FIG. 5C, in addition to or instead of solving the problem of the present invention, it is possible to achieve the same effect of suppressing the progression of or mitigating a refractive error, regardless of the amount of spherical aberration of the eye. The details thereof will be described as follows.

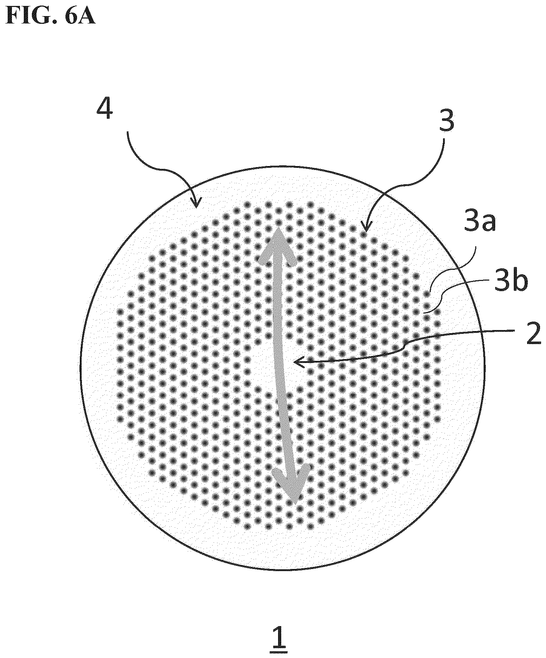

FIG. 6A is a diagram similar to the right figure in FIG. 3A, with the position through which the line of vision frequently passes when the eyeglass lens is worn indicated by an arrow.

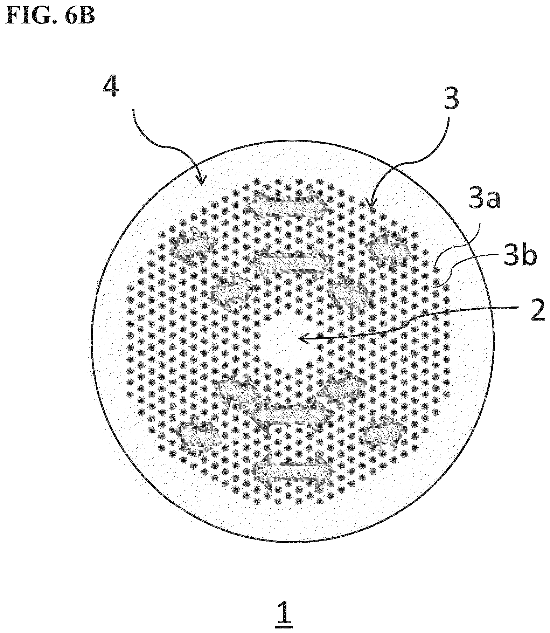

FIG. 6B is a diagram similar to FIG. 5C, illustrating a state in which the orientation of the eyeglass lens is determined so that buffer regions with the maximum astigmatism are arranged at positions through which the line of vision frequently passes, the orientation being intended for children having a spherical aberration of the eye whose absolute value is 0.080 $\mu$m.

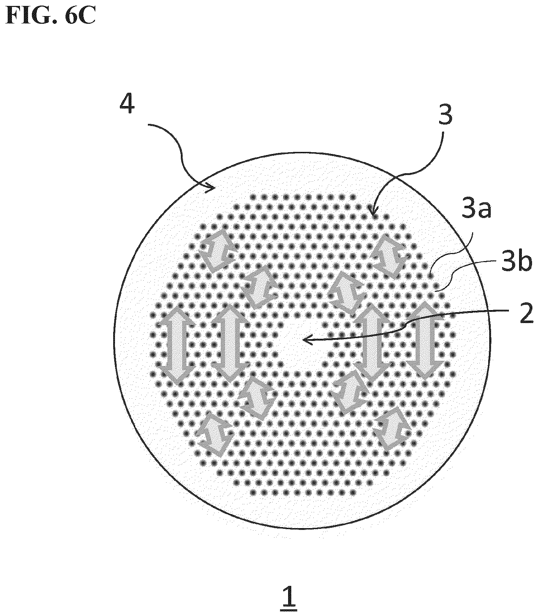

FIG. 6C is a diagram illustrating a state in which the orientation of the eyeglass lens is determined so that second refractive regions, where astigmatism is zero, are arranged at positions through which the line of vision frequently passes, the orientation being intended for children having a spherical aberration of the eye of zero.

The amount of spherical aberration of the eye varies among wearers (mainly children). If all second refractive regions of an eyeglass lens are provided with astigmatism, and a child with zero spherical aberration of the eye wears the eyeglass lens, the child would have unwanted astigmatism. Therefore, such eyeglass lenses will be assigned only to children with spherical aberration of the eye.

On the other hand, with the eyeglass lens shown in FIG. 5C, there are also second refractive regions with zero astigmatism depending on the radial direction. For example, when a child with zero spherical aberration of the eye wears the eyeglass lenses, the second refractive regions with zero astigmatism are arranged at positions where the line of vision frequently passes. By taking advantage of this feature and determining the orientation of the eyeglass lens as shown in FIGS. 6B and 6C according to the amount of spherical aberration of the wearer's eye, it is possible to achieve the same effect of suppressing the progression of or mitigating a refractive error regardless of the amount of spherical aberration of the eye. That is, by making one type of eyeglass lens with the second refractive regions (buffer regions) having astigmatism as shown in FIG. 5C, it is possible to provide eyeglass lenses for wearers, regardless of the amount of spherical aberration of the eye. This can realize a versatile eyeglass lens.

In solving the problem described in the paragraph above, spherical aberration is of course not compensated for children with zero spherical aberration of the eye. Therefore, the present specification names such a second refractive region as a buffer region, but it can also be referred to as a spherical aberration compensable region.

When the orientation of the eyeglass lens is determined, the method further includes a mark adding step of adding, to the eyeglass lens, a mark indicating information that the buffer regions have different values of astigmatism depending on the circumferential positions. The information relates to in which radial direction from the lens center second refractive regions (buffer regions) of large astigmatism are present, and/or second refractive regions of small (or zero) astigmatism are present. There is no limitation on the type and size of the mark as long as this information, i.e., the orientation, is recognizable.

The technical concept of the present invention is also reflected in eyeglasses in which the eyeglass lens 1 is cut in the vicinity of the periphery thereof based on a predetermined frame shape and is fitted into the frame. Particularly, when an eyeglass lens with the above-described mark is handled, the technical concept of the present invention is also reflected in an eyeglass manufacturing method in which the orientation of the eyeglass lens is determined according to the magnitude of spherical aberration of the eye of the wearer and the eyeglass lens is fitted into the frame. In this case, if the above-described mark is placed at a position of the lens that corresponds to the outer side of the frame rim (hereinafter simply referred to as "frame"), the above-described mark will not intrude into the area used as the lens (inside the frame).

There is no limitation on the type, shape, and the like of the frame, and the frame may be a full rim, half rim, under rim, or rimless frame.

It has been found that the progression of myopia is suppressed more effectively for a human who has a greater absolute value of a difference between astigmatism of light that enters the upper retina (i.e., above the macular area, which is a central region,) and astigmatism of light that enters the lower retina (i.e., below the macular area).

Taking into the findings, letting the absolute value of the difference between astigmatism of light that enters the upper retina and astigmatism of light that enters the lower retina under the naked eye be V, and letting the absolute value of the difference between astigmatism of light that enters the upper retina through the retinal non-convergence regions 3a and astigmatism of light that enters the lower retina while the eyeglass lens is worn be V', when V' is more increased and enhanced than V, a higher myopia suppression effect is expected to be realized by the eyeglass lens.

Accordingly, also when the lens of the above-described embodiment, which has different values of astigmatism depending on its position on the lens, is fitted into a frame, it is preferable to fit the lens in an orientation such that V' is greater than V, as described above. This feature is an aspect of the invention of an eyeglass lens design method, as well as an aspect of the invention of an eyeglass manufacturing method, in which the direction of the fitting is determined in a manner such that V' is greater than V.

Furthermore, as an aid in fitting the lens, an orientation mark for indicating the above-described orientation may be provided at any position on the eyeglass lens (preferably outside the frame rim).

Eyeglasses may be manufactured with reference to the orientation mark described in the paragraph above when fitting the lens. At this time, the eyeglass lens manufacturing method that has been described so far may be applied. In this case, the orientation mark may be included in the mark used in the above-described mark adding step.

Also, characteristic values for the difference in astigmatism between the upper retina and the lower retina may be obtained by measuring the eyes of the wearer or by using values obtained statistically or academically in advance.

The technical concept of the present invention is also reflected in the mold used in the lathe-processing step and the method for processing (manufacturing) the same. Note that there is no limitation on the material of the mold used in the eyeglass lens manufacturing method according to one aspect of the present invention, and the mold may be made of metal or glass.

A case has been described where the dip method is employed in the laminating step, but other methods may be employed together with or instead of the dip method. For example, a spin coating method may be used. The spin coating method facilitates uniform film thickness and is useful when the shapes of the second substrate-refractive regions are to be maintained even on the topmost surface of the eyeglass lens. In addition, if a vacuum evaporation method is used for film deposition, a more uniform film thickness can easily be achieved. A hard coat film may be deposited using the dip method, and an antireflection film may be deposited on the surface of the hard coat film by vacuum evaporation. A protective film (such as a water-repellent or hydrophilic antifouling film and an antifog film) may further be provided to cover the antireflection film, or any film may be formed between the lens substrate and the protective film.

When using the dip method, the amount of astigmatism can be increased by increasing the pulling speed.

When using the spin coating method, the film thickness is typically likely to be uniform, whereas the amount of astigmatism can be slightly increased by increasing the rotational speed.

The protrusion distances of the retinal non-convergence regions 3a from the base region 3b may be larger than 1.00 μm. Also, the protrusion distances of the second substrate refractive regions from the base region 3b may be larger than 1.00 μm. If the second substrate-refractive regions have a size in this extent, uneven film thickness can be effectively generated when performing film deposition using the dip method. An example of the upper limit of the protrusion distances is 2.00 μm. Note that in the lathe-processing step, portions of the mold that correspond to the second substrate-refractive regions may be recessed with respect to a portion of the mold that corresponds to the first substrate-refractive region, in which the distances of the recessed portions are set to a value larger than 1.00 μm, and an example of the upper limit thereof is 2.00 μm.

"The protrusion distances from the base region 3b" are also referred to as "sag amounts". A sag amount refers to, if there is no retinal non-convergence region 3a, the maximum distance of the retinal non-convergence region 3a from a tangent plane of the base region 3b (e.g., the distance from the tangent plane to the apex of the convex region).

In the foregoing description, the influence of spherical aberration of the eye in on-axis and near-axis optical fluxes have been discussed. On the other hand, the inventors of the present invention have found that even for light fluxes in which the optical power and astigmatic characteristics outside the axis have changed from those on the axis, optical characteristics as intended cannot be obtained due to eyeball astigmatism, especially spherical aberration. More specifically, the inventors of the present invention have found the problem that the contrast of the focused light created at the point defocused from the retina due to the segmentation effect is no longer strong relative to a non-focused light area. According to a working example of the present invention, this problem is solved without increasing the manufacturing cost.

Note however that the spherical aberration and its compensation is more likely to be affected on on-axis light flux, which is less affected by astigmatism due to the incident angle to the eye. Therefore, it is easier to obtain an effect if sufficient astigmatism is given from the lens center or from retinal non-convergence regions 3a near the central clear region.

<Specific Example (Overview) of Eyeglass Lens 1>

Hereinafter, overview of one specific example of the eyeglass lens 1 according to one aspect of the present invention will be described.

The eyeglass lens according to one aspect of the present invention includes a central clear region and a functional region.

The central clear region is a region that includes the lens center and/or an eye point, and causes a luminous flux that has entered an object-side face to exit from an eyeball-side face, enter a pupil of a wearer, and converge on a retina. That is to say, the central clear region is constituted by the base region 3b. The central clear region is a portion with a smooth surface shape that can realize the prescription refractive power of the wearer in terms of geometrical optics, and is, for example, a portion that is transparent in the visible light wavelength range.

The "eye point (EP)" is, for example, a position through which the line of sight passes when a wearer wears the eyeglass lens and faces straight ahead, and hereinafter, the position is taken as an example. The eye point may be a position, i.e., near vision eye point, through which the line of sight of a wearer passes when the wearer views an object close to the wearer (in order words, in near vision). According to one aspect of the present invention, a case where the geometric center of the eyeglass lens before it is fitted into the frame matches with the eye point, also matches with the prism reference point, and also matches with the lens center is taken as an example. Hereinafter, as the eyeglass lens of one aspect of the present invention, an eyeglass lens before being fitted into a frame will be exemplified, but the present invention is not limited to this aspect.

The position of the eye point can be determined with reference to a remark chart or a centration chart issued by the lens manufacturer.

Using the central clear region according to one aspect of the present invention, the prescription degree (such as spherical degree, astigmatic vision degree, and astigmatic axis) can be realized. This spherical degree may be a degree (e.g., degree of far-sightedness, and an example of the degree of far-sightedness will be given later) that should be corrected when viewed in a front view (distance from the object is about infinity to 1 m), or may be a degree that should be corrected when viewed at an intermediate distance (1 m to 40 cm) or at a near distance (40 cm to 10 cm).

The central clear region is not provided with a configuration (examples thereof include the convex region 3a and/or concave region to serve as the retinal non-convergence region 3a, an embedded structure, and the like) intended to bring about the effect of suppressing the progression of or mitigating a refractive error (i.e., myopia progression suppressing effect or hyperopia mitigating effect).

The central clear region (and the base region 3b within the functional region, and furthermore the outer clear region) according to one aspect of the present invention functions as a so-called single focus lens.

Incidentally, prescription data of wearer's information is written on the lens bag of the eyeglass lens. In other words, if there is a lens bag, it is possible to identify the eyeglass lens as an object based on the prescription data of wearer's information. Also, eyeglass lens is usually supplied as a set with a lens bag. Therefore, the technical concept of the present invention is also reflected in the eyeglass lens equipped with a lens bag, and the same applies to a set of lens bag and eyeglass lens.

The functional region is an annular region, in a plan view, that is adjacent to the central clear region and encloses the central clear region. The region of the functional region except for the base region 3b are the retinal non-convergence region 3a.

For example, when the convex regions 3a are provided in an island shape as the second refractive region in Patent Document 1, and the first refractive region (base region 3b that has the same function as the central clear region) that realizes the prescription degree is provided around the convex regions, a circular region including the base region 3b and the convex regions 3a is regarded as the functional region.

The eyeglass lens according to one aspect of the present invention includes an annular outer clear region that is adjacent to the functional region on the outer edge side of the eyeglass lens and encloses the functional region. The outer clear region causes a luminous flux that has entered the object-side face to exit from the eyeball-side face, enter the pupil of the wearer, and converge on the retina. That is to say, the functional region is a ring-shaped region that is present between the outer clear region and the central clear region.

There is no limitation on the shape of the functional region 3, and it may be ring-shaped in a plan view. The ring can be circular, rectangular, elliptical, or the like, or a combination thereof on the inner side (that is, at the boundary between the central clear region 2 and the functional region 3) and/or on the outer side (that is, at the boundary between the outer clear region 4 and the functional region 3).

The eyeglass lens 1 according to one aspect of the present invention may be the eyeglass lens 1 after having been fitted into a frame, in which a part of the functional region 3 of the eyeglass lens 1 may be in contact with the outer edge of the eyeglass lens 1 and another part of the functional region 3 may be in contact with the outer clear region 4. Also, providing any retinal non-convergence region 3a on the further outer edge of the outer clear region 4 is not precluded.

Note however that in consideration of facilitating favorable visibility even in peripheral visual field, it is preferable not to provide, between the outer edge and the functional region 3 of the eyeglass lens 1, any configuration that is intended to have the myopia progression suppressing effect or hyperopia mitigating effect. In other words, it is preferable that the entire area between the outer edge and the functional region 3 of the eyeglass lens 1 be the outer clear region 4.

Also, the functional region may be extended toward the lens center in a manner so as to fill the central clear region of the eyeglass lens 1 (for example, FIG. 10 of Patent Document 1). Note however that taking into consideration the line of vision frequently passing through the lens center, it is preferable to provide the central clear region as in the above-described eyeglass lens according to one aspect of the present invention.

According to a characteristic aspect of the present invention, the retinal non-convergence regions 3a are provided within the functional region 3 of the entire eyeglass lens 1 in a concentrated manner. In other words, it is preferable that no retinal non-convergence region 3a be provided in the outer clear region 4 on the outer edge side of the functional region 3 (preferably, between the outer edge of the functional region 3 and the outer edge of the eyeglass lens 1).

There is no limitation on the size and shape of the central clear region 2. As a rough indication for the lower limit of the size of the central clear region 2, the central clear region 2 may have a size large enough to encompass a circle having a diameter of 5.00 mm centered on the lens center (eye point EP). As a rough indication for the upper limit of the size of the central clear region 2, the central clear region 2 may have a size large enough to be encompassed by a circle having a diameter of 10.00 mm centered on the lens center. The minimum value of the horizontal distance from the lens center to the edge of the central clear region 2 (or the minimum radius if the clear region is circular in a plan view) may be 3.60 mm or less. The area of the central clear region 2 may be 80 mm$^2$ or less. The shape of the central clear region 2 may be circular, rectangular, elliptical, or the like in a plan view.

There is no limitation on the size and shape of the functional region 3. As a rough indication for the lower limit of the size of the functional region 3, the functional region 3 may have a size large enough to encompass a circle having a diameter of 15 mm centered on the lens center. As a rough indication for the upper limit of the size of the functional region 3, the functional region 3 may have a size large enough to be encompassed by a circle having a diameter of 50.00 mm centered on the lens center. The shape of the functional region 3 is ring-shaped in a plan view, and the ring may be circular, rectangular, elliptical, polygonal, or the like, or a combination thereof on the inner side (that is, at the boundary between the central clear region 2 and the functional region 3) and/or on the outer side (that is, at the boundary between the outer clear region 4 and the functional region 3).

For example, when the wearer is near-sighted, the interpupillary distance (PD) tends to be reduced by convergence. Accordingly, in this case, the line of sight of the wearer will pass through the region on the lens center side (nasal side) with respect to the eye point.

Therefore, taking into consideration this point of view, it is also preferable to shift the placement of the central clear region 2 from the center (for example, the geometric center) of the lens 1 to the inner side (nasal side when the wearer wears the lens). In this case, the center of the central clear region 2 is shifted to the nasal side from the geometric center (or eye point) of the lens 1. The "center" in the present specification refers to, in the case of a circle or oval, the center thereof, and refers to, in other shapes, the center of gravity.

In this case, it is also desirable that the plurality of retinal non-convergence regions 3a (and hence the functional region 3) designed and arranged according to the above-described embodiment are also, as a whole, shifted to the nasal side with respect to the lens center and are arranged asymmetrically within the region of the lens 1.

FIG. 7 is a diagram illustrating an example of a definition of the boundary between the functional region and the central clear region, that is, an example of a definition of the boundary between the functional region and the outer clear region.

The center-side shape of the functional region 3 (that is, the shape of the central clear region 2) is preferably defined in the following aspect.

In a plan view, an envelope EL2 of a collection of all circles of a diameter of 4 mm that can be circumscribed to retinal non-convergence regions 3a within the functional region 3 without including other retinal non-convergence regions 3a on the side of the central clear region 2 may be defined as a boundary between the functional region 3 and the central clear region 2. Here, each of these circles is also referred to as a clear pupil circle. Instead of an envelope of a collection of clear pupil circles, a "collection of clear pupil circles" may be defined as being the shape of the central clear region 2.

The outer edge shape of the functional region 3 (that is, the shape of the outer clear region 4 on the functional region 3 side and the boundary between the two regions) is preferably defined in the following aspect.

In a plan view, an envelope EL1 of a collection of all circles of a diameter of 4 mm that can be circumscribed to retinal non-convergence regions 3a within the functional region 3 without including other retinal non-convergence regions 3a on the side of the outer clear region 4 may be defined as a boundary between the functional region 3 and the outer clear region 4 (a definition of the outer edge side of the functional region 3). Hereinafter, an envelope is exemplified, but instead of an envelope of a collection of clear pupil circles, a "collection of clear pupil circles" may be defined as being the shape of the outer clear region 4. That is, the outer clear region 4 may include the eye point EP and may be constituted by a collection of clear pupil circles. Also, the region of the eyeglass lens 1 other than the central clear region 2 and the outer clear region 4 may be defined as the functional region 3.

As a rough indication, in the functional region 3, it may be defined that 30% or more (or 40%, 50%, or 60% or more) of light flux that has entered the pupil of the wearer is not converged on the retina. If the value of the percentage is larger, the myopia progression suppressing effect or hyperopia mitigating effect is expected to be larger, whereas visibility is reduced. The value of the percentage needs only to be determined taking into consideration a combination of the effect of suppressing the progression of myopia or mitigating hyperopia and visibility.

Note that the area of the retinal non-convergence regions 3a in the functional region 3 in a plan view may be defined as 30% or more (or 40%, 50%, or 60% or more) of the entire functional region 3. The upper limit may be defined as, for example, 70%.

There is no limitation on the predetermined range of at least one diameter extending from the lens center, in a plan view of the functional region. For example, all the retinal non-convergence regions 3a within the entire band-shaped region consisting of a collection of circles of a diameter of 4 mm that pass through the entire functional region (from the region near the lens center to the region near the outer edge of the lens) may be defined as the buffer regions. On the other hand, only a part of the above-described predetermined range may be defined as the band-shaped region. The band-shaped region may constitute 30% or more (or 40%, 50%, or 60% or more) of the area of the entire band-shaped region.

When the functional region is viewed in a plan view, the above-described conditions are satisfied by at least one diameter extending from the lens center, but the above-described conditions may be satisfied by all diameters or only some diameters as in the case of film deposition using the above-described dip method.

<Specific Example (Details) of Eyeglass Lens 1>

Hereinafter, details of a specific example of the eyeglass lens 1 according to one aspect of the present invention will be described.

In the functional region 3, one example of a configuration (retinal non-convergence region 3a) that achieves the myopia progression suppressing effect or hyperopia mitigating effect is a defocusing region.

The defocus region is a region in which at least a part thereof does not allow light to be focused at a focus position by the base region 3b in view of geometric optics. The defocus region is a portion corresponding to the micro-convex portions in Patent Document 1. Similar to the eyeglass lens described in Patent Document 1, the eyeglass lens 1 according to one aspect of the present invention is a myopia progression suppressing lens. Similar to the micro-convex portions in Patent Document 1, the plurality of defocus regions according to one aspect of the present invention need only to be formed on at least one of the object-side face and the eyeball-side face of the eyeglass lens 1. In this specification, a case in which the plurality of defocus regions are formed only on the object-side face of the eyeglass lens 1 will be mainly described as an example. Hereinafter, unless otherwise noted, the case in which the defocus regions are curved surfaces protruding toward the outside of the lens is exemplified.

It is preferable that more than half of the plurality of defocus regions (all defocus regions in the functional region) be arranged in the same cycle in a plan view. An example of a pattern with the same cycle is an equilateral triangle arrangement in a plan view (with the centers of the defocus regions respectively arranged at vertices of an equilateral triangle net, which is a so-called honeycomb structure). The ratio of the number of the defocus regions is preferably 80% or more, more preferably 90% or more, and even more preferably 95% or more. Hereinafter, preferred examples of "more than half (or more than 80%) of all defocus regions in the functional region" will be 80% or more, 90% or more, and 95% or more in the order of preference as in the description above, and redundant descriptions will be omitted.

The shape of the defocus regions may be spherical, aspherical, toric, or a mixture of them (for example, the center area of each defocus region is spherical and the peripheral area outside the center is aspheric). It is sufficient that at least the buffer regions have a toric shape.

The boundary between the center area and the peripheral area may be located at 1/3 to 2/3 of the radius of the defocus region (or convex region 3a). However, at least the center area of the defocus region (or convex region 3a) preferably has a convex curved shape protruding toward the outside of the lens. Also, since it is preferable that more than half of the plurality of defocus regions (all defocus regions in the functional region) are arranged in the same cycle in a plan view, the defocus regions other than the buffer regions are preferably spherical. Of course, a configuration is also possible in which all of the defocus regions are buffer regions, and in this case, surfaces of all of the defocus regions are toric.

Each defocus region has, for example, the following configuration. The diameter of the defocus region in a plan view is preferably about 0.6 to 2.0 mm. The surface area of each defocus region may be about 0.50 to 3.14 mm$^2$. The convex region 3a is spherical with a curvature radius of about 50 to 250 mm, preferably 86 mm.

Although there is no limitation on specific numerical values of the defocus power in each defocus region, it is preferable that the smallest value of the defocus power provided by the defocus regions on the eyeglass lens 1 is within a range of 0.50 to 4.50 D, and the largest value thereof is within a range of 3.00 to 10.00 D. The difference between the largest value and the smallest value is preferably within a range of 1.00 to 5.00 D.

The "defocus power" refers to the difference between the refractive power of each defocus region and the refractive power of the portion other than the defocus regions. In other words, "defocus power" is a difference obtained by subtracting the refractive power of the base region from the average of the lowest and highest refractive powers of the defocus regions at a given position. In the present specification, a case where the defocus regions are convex regions 3a is exemplified.

The "refractive power" in this specification refers to the average refractive power, which is the average of the refractive power in a direction where the refractive power is lowest and the refractive power in a direction (the direction that is perpendicular to the above-described direction) where the refractive power is highest.

There is no particular limitation on the arrangement of the defocus regions, and the arrangement can be determined, for example, from the viewpoint of the visibility of the defocus regions from the outside, design enhancement by the defocus regions, refractive power adjustment by the defocus regions, and the like. Note that a defocus region is an example of a retinal non-convergence region 3a, and does not converge a light flux on the retina but converges a light flux on the front side (in the -Z direction) of the retina.

In the functional region 3 placed around the central clear region 2 of the eyeglass lens 1, substantially circular defocus regions may be arranged in an island shape (i.e., separated from each other without being adjacent to each other) at equal intervals in the circumferential and radial directions. Examples of the arrangement of the defocus regions in a plan view include an arrangement in which they are independently and discretely arranged such that the centers of the convex regions 3a respectively match vertices of an equilateral triangle (the centers of the defocus regions are respectively arranged at vertices of a honeycomb structure). In this case, the interval between the defocus regions may be 1.0 to 2.0 mm. Also, the number of the defocus regions (or retinal non-convergence regions 3a) may be 10 to 200.

The lens substrate is made of, for example, a thermosetting resin material such as thiourethane, allyl, acrylic, or epithio resin. As the resin material for forming the lens substrate, other resin materials that realize a desired refractive index may be selected. The lens substrate may also be made of inorganic glass instead of resin material.

A hard coat film is made of, for example, a thermoplastic or UV curable resin. The hard coat film can be formed by dipping the lens substrate in hard coat solution or by using spin coating or other methods. The deposition of the hard coat film improves the durability of the eyeglass lens 1.

An antireflection film is formed, for example, through vacuum deposition of an antireflective agent such as $ZrO_2$, $MgF_2$, or $Al_2O_3$. The deposition of the antireflection film improves the visibility of an image through the eyeglass lens 1.

As described above, a plurality of defocus regions are formed on the object-side face of the lens substrate. Accordingly, when the face is coated with the hard coat film and the antireflection film, the hard coat film and the antireflection film also form a plurality of defocus regions, following the defocus regions of the lens substrate.

The thickness of each film formed through the laminating step may be, for example, in a range of 0.1 to 100 μm (preferably 0.5 to 5.0 μm, and more preferably 1.0 to 3.0 μm). However, the thickness of the films is determined according to the function required for the films and is not limited to the ranges given as an example.

The technical scope of the present invention is not limited to the above-described embodiments, but also includes forms in which various changes and improvements are made to the extent that specific effects obtained by the configuration requirements of the invention or a combination thereof can be derived.

In one aspect of the present invention, the astigmatic distribution in FIG. 5C is realized by combining the astigmatism provided in the second substrate-refractive regions of the lens substrate and the astigmatism provided by the film deposition using the dip method, but the method for realizing the astigmatic distribution is not limited to this. For example, the surface shape of the second substrate-refractive region of the lens substrate is set so as to bring about the astigmatic distribution shown in FIG. 5C. Specifically, the concave regions are processed to such a shape in the lathe-processing step for the mold. The film deposition on the lens substrate may be performed by the spin coating method, which realizes a relatively uniform film thickness, or by the vacuum evaporation method, which realizes a uniform film thickness. Also, in the dip method, decreasing the pulling speed makes the film thickness relatively uniform.

Working Example

The following working example is provided to illustrate the present invention in detail. It will be appreciated that the present invention is not limited to the following working example.

<Reference Example 1>

An eyeglass lens 1 as follows was produced. Note that the eyeglass lens 1 was constituted only by a lens substrate, and the lens substrate was not coated with other substances. As the prescription refractive power, S (spherical power) was set to 0.00 D and C (cylindrical power) was set to 0.00 D.

- Diameter of lens substrate in plan view: 60.00 mm
- Type of lens substrate: PC (polycarbonate)
- Refractive index of lens substrate: 1.589

The above contents were the same in the specific examples and thus will not be described hereinafter.

In this example, the range of the central clear region 2 was set as the region of a circle with a radius of 3.50 mm from the lens center, and the range of the functional region 3 was set as being within a circle with a radius of 12.50 mm from the lens center (excluding the central clear region 2). Note that the outer clear region 4 was provided on the outer edge side of the eyeglass lens 1 relative to the functional region 3. The entire region between the outer edge and the functional region 3 of the eyeglass lens 1 is set as the outer clear region 4 (the same applies to the following cases).

Furthermore, the following configurations were adopted in this example.

- Configuration of functional region 3: the convex regions 3a serving as defocus regions are discretely arranged. In the functional regions 3, the regions other than the convex regions 3a are the base regions 3b.
- Shape of convex regions 3a: spherical
- Shape of convex regions 3a in plan view: perfect circle
- Refractive power of convex regions 3a: 3.50 D
- Face on which convex regions 3a were formed: object-side face
- Arrangement of convex regions 3a in plan view: the convex regions were independently and discretely arranged such that the centers of the convex regions 3a respectively matched with vertices of an equilateral triangle (the centers of the convex regions 3a were respectively arranged at vertices of a honeycomb structure)
- Pitch between convex regions 3a (distance between centers of convex regions 3a): 1.50 mm
- Pupil diameter of wearer: assumed to be 4.00 mm
- Absolute value of spherical aberration of eye of wearer: assumed to be zero

<Comparative Example 1>

In this example, the following items were changed from those in Reference Example 1.

- Absolute value of spherical aberration of eye of wearer: assumed to be 0.80 μm

<Working Example 1>

In this example, the following items were changed from those in Comparative Example 1.

• Shape of convex regions 3a: toric surface whose axial direction is a circumferential direction
• Shape of convex regions 3a in plan view: elongated along circumferential direction (long axial length: 1.06 mm, short axial length: 1.00 mm)
• Average refractive index of convex regions 3a: 3.50 D
• Amount of astigmatism caused by convex regions 3a: -0.40 D with circumferential direction serving as axial direction (minimum refractive power)

<Results>

Results will be described below although they are the same as the findings leading to the present invention.

As shown in FIG. 2B, which corresponds to Comparative Example 1, the contrast ratio is reduced due to spherical aberration of the eye, compared to in FIG. 2A, which corresponds to Reference Example 1 (where the spherical aberration of the eye is zero).

On the other hand, as shown in FIG. 2C, which corresponds to Working Example 1, due to the second refractive regions serving as buffer regions, the contrast ratio can be maintained at a level comparable to that in FIG. 2A. That is to say, as shown in the right figure in FIG. 3B, due to compensation of local astigmatism of the eye at some positions in distribution thereof, it is possible to suppress a reduction in the contrast ratio.

Description of Reference Numerals

1 ... Eyeglass lens
2 ... Central clear region
3 ... Functional region
3a ... Retinal non-convergence region (convex region)
3b ... Base region
4 ... Outer clear region
P ... Wavefront map of the eye
C1 ... Clear pupil circle (to define the boundary between the functional region and the central clear region)
C2 ... Clear pupil circle (to define the boundary between the functional region and the outer clear region)

**Claims**

1.  An eyeglass lens comprising a functional region,

    wherein the functional region includes:

        a base region that causes a luminous flux that has entered an object-side face to exit from an eyeball-side face, enter a pupil of a wearer, and converge on a retina; and
        retinal non-convergence regions that cause a luminous flux that has entered the object-side face to exit from the eyeball-side face, and do not cause a luminous flux that has entered the pupil of the wearer to converge on the retina,

    at least some of the retinal non-convergence regions are buffer regions that can compensate local negative astigmatism occurring due to spherical aberration of the eye at some positions of a distribution of the astigmatism, and
    surfaces of the buffer regions are toric surfaces whose axial direction is a circumferential direction, and are elongated along the circumferential direction in a plan view.

2.  The eyeglass lens according to claim 1,

    wherein in a plan view of the functional region, retinal non-convergence regions within a band-shaped region are the buffer regions, the band-shaped region being constituted by a collection of circles having a diameter of 4 mm with centers of the circles passing through a predetermined range of at least one diameter extending from a lens center, and
at least three buffer regions are arranged in a dispersed manner within any one of the circles having the diameter of 4 mm in the band-shaped region.

3. The eyeglass lens according to claim 2,
wherein the buffer regions are dispersed in a manner such that a first interval, which is a length of a line segment connecting centers of two buffer regions, and a second interval, which is a distance between the line segment and a center of another buffer region that is closest to the line segment and whose center is located on a normal to the line segment, are both less than 2 mm.

4. The eyeglass lens according to claim 1,
wherein astigmatism of the buffer regions has an absolute value of 0.25 to 0.50 D.

5. The eyeglass lens according to claim 1,
wherein the retinal non-convergence regions have a shape protruding from the base region.

6. The eyeglass lens according to claim 5,
wherein a protrusion distance of the retinal non-convergence regions from the base region is greater than 1.00 $\mu$m.

7. The eyeglass lens according to claim 1,

wherein the retinal non-convergence regions at least include non-convergence regions A1 and B1,
at least the non-convergence region B1 is a buffer region, and
in a plan view, the retinal non-convergence region A1, which is located close to the lens center, is more elongated along the circumferential direction than the retinal non-convergence region B 1, which is located away from the lens center.

8. The eyeglass lens according to claim 1,
wherein there are two straight lines in a relationship in which, among the retinal non-convergence regions located on each circumference, a retinal non-convergence region located on one straight line passing through the lens center has a larger absolute value of astigmatism, and a retinal non-convergence region located on the other straight line perpendicular to the one straight line and passing through the lens center has a smaller absolute value of astigmatism.

9. The eyeglass lens according to claim 8,
wherein the eyeglass lens is provided with a mark indicating information that values of astigmatism vary according to circumferential positions in the buffer regions.

10. The eyeglass lens according to claim 1, further comprising:

a lens substrate; and
laminated films provided to cover the lens substrate,
wherein the lens substrate includes:

a first substrate-refractive region serving as a basis of the base region; and
second substrate-refractive regions serving as a basis of the retinal non-convergence regions, and

surfaces of the second substrate-refractive regions, which serve as a basis of the buffer regions, are toric surfaces whose axial direction is a circumferential direction, and are elongated along the circumferential direction in a plan view.

11. The eyeglass lens according to claim 10,

wherein in a plan view of the lens substrate, the surfaces of the second substrate-refractive regions within a band-shaped region are toric surfaces whose axial direction is a circumferential direction, and are elongated along the circumferential direction in a plan view, the band-shaped region being constituted by a collection of circles having a diameter of 4 mm with centers of the circles passing through a predetermined range of at least one diameter extending from the lens center, and
at least three second substrate-refractive regions are arranged in a dispersed manner within any one of the circles having the diameter of 4 mm in the band-shaped region.

12. The eyeglass lens according to claim 11,
wherein the second substrate-refractive regions are dispersed in a manner such that a third interval, which is a length of a line segment connecting centers of two second substrate-refractive regions, and a fourth interval, which is a distance between the line segment and a center of another second substrate-refractive region that is closest to the line segment and whose center is located on a normal to the line segment, are both less than 2 mm.

13. The eyeglass lens according to claim 10,

wherein the second substrate-refractive regions, which serve as a basis of the retinal non-convergence regions, at least include second substrate-refractive regions a1 and b1,
at least the second substrate-refractive region b1 serves as a basis of the buffer region, and
in a plan view, the second substrate-refractive region b1, which is located away from the lens center, is more elongated along the circumferential direction than the second substrate-refractive region a1, which is located close to the lens center.

14. The eyeglass lens according to claim 10,
wherein the second substrate-refractive regions have a shape protruding from the first substrate-refractive region.

15. The eyeglass lens according to claim 14,
wherein a protrusion distance of the second substrate-refractive regions from the base region is greater than 1.00 $\mu$m.

16. The eyeglass lens according to claim 10,
wherein at least one of the laminated films has a thickness unevenly distributed around the second substrate-refractive regions, and the buffer regions on each circumference have values of astigmatism that vary according to circumferential positions.

17. The eyeglass lens according to claim 10, further comprising
a central clear region enclosed by the annular functional region.

18. The eyeglass lens according to claim 17,
wherein a center of the central clear region is located at a geometrical center of the lens.

19. The eyeglass lens according to claim 17,
wherein a center of the central clear region is shifted from a geometrical center of the lens to a nasal side.

20. A method for manufacturing an eyeglass lens provided with a functional region including:

a base region that causes a luminous flux that has entered an object-side face to exit from an eyeball-side face, enter a pupil of a wearer, and converge on a retina; and
retinal non-convergence regions that cause a luminous flux that has entered the object-side face to exit from the eyeball-side face, and do not cause a luminous flux that has entered the pupil of the wearer to converge on the retina,

at least some of the retinal non-convergence regions being buffer regions that compensates local negative astigmatism occurring due to spherical aberration of the eye at some positions of a distribution of the astigmatism, and
the eyeglass lens at least including a lens substrate,
the lens substrate including:

a first substrate-refractive region serving as a basis of the base region; and
second substrate-refractive regions serving as a basis of the retinal non-convergence regions,

the method comprising:

a lathe-processing step of performing lathe-processing on a mold so that surfaces of the second substrate-refractive regions, which serve as a basis of the buffer regions, are toric surfaces whose axial direction is a circumferential direction, and are elongated along the circumferential direction in a plan view; and

a molding step of molding the lens substrate using the lathe-processed mold.

21. The method according to claim 20,
wherein the lathe-processing step is performed on the mold so that in a plan view of the lens substrate, the surfaces of the second substrate-refractive regions within a band-shaped region are toric surfaces whose axial direction is a circumferential direction, and are elongated along the circumferential direction in a plan view, the band-shaped region being constituted by a collection of circles having a diameter of 4 mm with centers of the circles passing through a predetermined range of at least one diameter extending from the lens center, and so that at least three second substrate-refractive regions are arranged in a dispersed manner within any one of the circles having the diameter of 4 mm in the band-shaped region.

22. The method according to claim 21,
wherein the second substrate-refractive regions are dispersed in a manner such that a third interval, which is a length of a line segment connecting centers of two second substrate-refractive regions, and a fourth interval, which is a distance between the line segment and a center of another second substrate-refractive region that is closest to the line segment and whose center is located on a normal to the line segment, are both less than 2 mm.

23. The method according to claim 20 or 21,

wherein the second substrate-refractive regions, which serve as a basis of the retinal non-convergence regions, at least include second substrate-refractive regions a1 and b1,
at least the second substrate-refractive region b1 serves as a basis of the buffer region, and
the lathe-processing step of performing lathe-processing on the mold is executed so that, when lathe-processing the mold to form the lens substrate, in a plan view, the second substrate-refractive region b1, which is located away from the lens center, is more elongated along the circumferential direction than the second substrate-refractive region a1, which is located close to the lens center.

24. The method according to claim 20 or 21,
wherein in the lathe-processing step, portions of the mold that correspond to the second substrate-refractive regions are recessed with respect to a portion of the mold that corresponds to the first substrate-refractive region, in order for the second substrate-refractive regions to have a shape protruding from the first substrate-refractive region.

25. The method according to claim 24,
wherein distances of the recessed portions are greater than 1.00 $\mu$m.

26. The method according to claim 20 or 21, further comprising

a laminating step of providing laminated films so that the laminated films cover the lens substrate obtained using the lathe-processed mold,
wherein by forming at least one of the laminated films using a dip method, thickness of the film is unevenly distributed around the second substrate-refractive regions, and the buffer regions have values of astigmatism that vary according to the circumferential positions.

27. The method according to claim 26,
wherein there are two straight lines in a relationship in which, among the retinal non-convergence regions located on each circumference, a retinal non-convergence region located on one straight line passing through the lens center has a larger absolute value of astigmatism, and a retinal non-convergence region located on the other straight line perpendicular to the one straight line and passing through the lens center has a smaller absolute value of astigmatism.

28. The method according to claim 27, further comprising
a mark adding step of adding, to the eyeglass lens, a mark indicating information that the buffer regions have different values of astigmatism depending on circumferential positions.

29. Eyeglasses in which the eyeglass lens according to any one of claims 1 to 19 is fitted to a frame.

**30.** A method for manufacturing eyeglasses,
wherein an orientation of an eyeglass lens is determined based on a magnitude of spherical aberration of an eye of a wearer using the mark of the eyeglass lens according to claim 9 as a reference, and the eyeglass lens is fitted to a frame.

**31.** A method for designing an eyeglass lens,

wherein a direction of fitting the eyeglass lens according to any one of claims 1 to 19 is determined so that assuming, when the eyeglass lens is not worn by a wearer, an absolute value of a difference between astigmatism of light that enters an upper portion of a retina and astigmatism of light that enters a lower portion of the retina as V, and
when the eyeglass lens is worn by the wearer, an absolute value of a difference between astigmatism of light that passes through a retinal non-convergence region and enters the upper portion of the retina, and astigmatism of light that enters the lower portion of the retina as V',
V' is greater than V

**32.** A method for manufacturing eyeglasses comprising fitting the eyeglass lens to a frame in accordance with an orientation determined by the design method according to claim 31.

FIG. 1A

P

**FIG. 1B**

P

## FIG. 1C

## FIG. 2A

**FIG. 2B**

**FIG. 2C**

FIG. 3A

## FIG. 3B

## FIG. 4A

β=1.26mm

3b

α= 1.45mm

**FIG. 4B**

β=2.36mm

α=1.1mm

**FIG. 5A**

1

**FIG. 5B**

1

FIG. 5C

1

FIG. 6A

1

**FIG. 6B**

**FIG. 6C**

<u>1</u>

**FIG. 7**

_1_

# EP 4 488 744 A1

| | | |
|---|---|---|
| **INTERNATIONAL SEARCH REPORT** | International application No. | |
| | **PCT/JP2022/047024** | |

| | |
|---|---|
| **A.** | **CLASSIFICATION OF SUBJECT MATTER** |

*G02C 7/06*(2006.01)i
FI: G02C7/06

According to International Patent Classification (IPC) or to both national classification and IPC

| | |
|---|---|
| **B.** | **FIELDS SEARCHED** |

Minimum documentation searched (classification system followed by classification symbols)

G02C7/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | JP 2021-5081 A (HOYA LENS THAILAND LTD.) 14 January 2021 (2021-01-14) claims, paragraphs [0007]-[0081], examples 2, 4, 7, 9 | 1-7, 10-15, 17-19, 29 |
| A | | 8-9, 16, 20-28, 30-32 |
| A | TW 202207889 A (HOYA LENS THAILAND LTD.) 01 March 2022 (2022-03-01) entire text, all drawings | 1-32 |
| A | CN 114114711 A (EAST CHINA SEA OPTICAL JOINT-STOCK AGENCY) 01 March 2022 (2022-03-01) entire text, all drawings | 1-32 |
| A | JP 2021-105692 A (HOYA LENS THAILAND LTD.) 26 July 2021 (2021-07-26) entire text, all drawings | 8-9, 16, 26-28, 30-32 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 February 2023** | **21 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="2"><strong>INTERNATIONAL SEARCH REPORT</strong><br>Information on patent family members</td><td colspan="2">International application No.<br><strong>PCT/JP2022/047024</strong></td></tr>
</table>

| Patent document cited in search report | Publication date (day/month/year) | Patent family member(s) | Publication date (day/month/year) |
|---|---|---|---|
| JP 2021-5081 A | 14 January 2021 | US 2022/0082864 A1 claims, paragraphs [0004]-[0182], embodiments 2, 4, 7, 9<br>WO 2020/262569 A1<br>EP 3990975 A1<br>DE 212020000497 U1<br>KR 10-2021-0107102 A<br>CN 113366377 A | |
| TW 202207889 A | 01 March 2022 | JP 2022-39960 A entire text, all drawings<br>WO 2022/044630 A1 entire text, all drawings | |
| CN 114114711 A | 01 March 2022 | JP 2022-100249 A entire text, all drawings<br>US 2022/0197058 A1 entire text, all drawings<br>EP 4030221 A2 | |
| JP 2021-105692 A | 26 July 2021 | EP 4083689 A1 entire text, all drawings<br>KR 10-2022-0051392 A<br>CN 114787695 A<br>WO 2021/131457 A1 | |

Form PCT/ISA/210 (patent family annex) (January 2015)

# EP 4 488 744 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20170131567
- WO 2020067028 A
- WO 2019166653 A
- WO 2021131457 A

### Non-patent literature cited in the description

- **ATHAIDE HV ; CAMPOS M ; COSTA C**. Study of ocular aberrations with age.. *Arq BrasOftalmol.*, September 2009, vol. 72 (5), 617-21
- **THIBOS LN ; HONG X ; BRADLEY A ; APPLEGATE RA**. Accuracy and precision of objective refraction from wavefront aberrations.. *J Vis.*, 23 April 2004, vol. 4 (4), 329-51